# EUROPÄISCHE PATENTSCHRIFT

(11) **EP 2 097 564 B1**
(45) Veröffentlichungstag und Bekanntmachung des Hinweises auf die Patenterteilung: **19.01.2011**
(21) Anmeldenummer: 07816181.7
(22) Anmeldetag: 08.10.2007
(51) Int. Cl.: D01G 15/28, G01B 7/14

(54) **TEXTILMASCHINE SOWIE BERÜHRUNGSLOSES MESSVERFAHREN**
TEXTILE MACHINE AND CONTACTLESS MEASUREMENT PROCESS
MACHINE TEXTILE ET PROCÉDÉ DE MESURE SANS CONTACT

(30) Priorität: 10.11.2006 CH 18112006; 27.04.2007 CH 695072007
(43) Veröffentlichungstag der Anmeldung: 09.09.2009
(73) Patentinhaber: MASCHINENFABRIK RIETER AG, 8406 Winterthur (CH)
(72) Erfinder: MEDVETCHI, Emil, 8400 Winterthur (CH); RIBI, Claudio, 8406 Winterthur (CH); TOBLER, Martin, 8620 Wetzikon (CH)
(86) Internationale Anmeldenummer: PCT/CH2007/000498
(87) Internationale Veröffentlichungsnummer: WO 2008/055367

(56) Entgegenhaltungen:
- WO-A-2006/119658
- DE-A1- 3 913 996
- DE-A1- 10 053 139

## Beschreibung

Die Erfindung betrifft eine Vorrichtung an einer Textilmaschine, insbesondere einer Spinnereivorbereitungsmaschine sowie ein berührungsloses Messverfahren. Das Messverfahren dient zur Messung des Abstandes zwischen zwei sich gegenüberliegenden Bauteilen mittels Funkenentladung. In der Anwendung in einer Spinnereivorbereitungsmaschine wird der Abstand zwischen zwei sich gegenüberliegenden Garnituren gemessen sowie eine Kollisionsgefahr derselben erkannt.

Es sind verschiedene Vorrichtungen bekannt, welche zur Bestimmung geometrischer Grössen das Prinzip der Funkenentladung zur Anwendung bringen. So offenbart zum beispielsweise die DE 35 13 799 C1 ein Gerät zur berührungslosen Abstandsermittlung mittels Funkenentladung im Bereich der Fertigungstechnik und Robotik. Dabei wird mit Hilfe eines Hochspannungsgenerators eine als Glimmentladung brennende Gasentladung zwischen einer Messelektrode und dem gegenüberliegenden Werkstück erzeugt. Die Gasentladung wird eine bestimmte Zeit aufrechterhalten. Während dieser Zeit wird der Strom, welcher über die Gasentladungsstrecke führt variiert bis ein bestimmter vorgegebener Wert erreicht wird; in diesem Moment wird die sekundärseitige Spannung am Hochspannungsgenerator gemessen. Da bei einer Gasentladung zwischen Spannung und Strom ein gesetzmässiger Zusammenhang besteht, welcher mit dem Abstand zwischen der Messelektrode und dem Werkstück variiert, ist es auf die Weise möglich den Abstand mit Hilfe einer Referenzmessung zu bestimmen. Beide Verfahren haben den Nachteil, dass die Funkenentladung über eine Messelektrode provoziert wird und dadurch eine Position oder ein Abstand in Abhängigkeit von Einbauort und Einbaubedingungen errechnet werden kann. Auch ist der elektrischen Isolation der verwendeten Messsonde besondere Beachtung zu schenken.

Eine weitere Anwendung der Funkenentladung offenbart die WO 93/21368. Über eine Messelektrode wird eine Spannung zwischen einer Messelektrode und darüber hinwegziehenden Nadeln einer Strickmaschine aufgebaut. Die bei der Funkenentladung erreichte Entladungsspannung sowie die Frequenz der Entladungen wird über einen Sensor gemessen und an eine Auswerteeinheit weitergegeben. Darin werden die Messresultate mit vorgegebenen Referenzwerten für Spannung und Frequenz verglichen. Dieser Vergleich zeigt schliesslich ob eine Nadel tatsächlich detektiert wurde oder nicht. Die Anordnung der Messelektrode ist derart vorgesehen, dass die vorbeiziehenden Nadeln einer Rundstrickmaschine eine unterbruchfreie Funkenentladung bewirken. Entsprechen Amplitude und Frequenz der Funkenentladung nicht den Referenzwerten, kann auf eine defekte oder fehlende Nadel geschlossen werden. Durch das Messverfahren wird die relative Güte der Nadeln in Bezug auf feste Referenzwerte bestimmt, ein tatsächlicher Abstand zwischen zwei Nadeln wird jedoch nicht gemessen, was keine hohen Anforderungen an die Messgenauigkeit stellt.
Beide Verfahren haben den Nachteil, dass die Funkenentladung über eine Messelektrode provoziert wird und dadurch eine Position oder ein Abstand in Abhängigkeit von Einbauort und Einbaubedingungen der Messelektrode errechnet werden muss.

Es sind auch verschiedene berührungslose Messverfahren und entsprechende Vorrichtungen zum Ermitteln des Abstandes von Garniturspitzen in Textilmaschinen bekannt. So ist beispielsweise in der DE 42 35 610 A1 ein induktiver Sensor offenbart, der dem Deckel einer Karde zugeordnet ist und der Walzengarnitur gegenüberliegt. In der DE 102 51 574 A1 ist ein optischer Sensor beschrieben, der den Abstand zwischen den freien Enden der Garnituren sowie entsprechenden Bezugsflächen zu erfassen vermag. Die DE 39 13 996 A1 offenbart ebenfalls berührungslose Sensoren, wobei hier kapazitive, induktive sowie optische Sensoren genannt sind.

Indirekte Messmethoden sind solche, bei denen nicht der unmittelbare Abstand der sich gegenüberliegenden Garniturspitzen gemessen wird. Ein Beispiel hierfür ist in der oben genannten DE 42 35 610 A1 beschrieben, welche eine Abstandsmessung der Trommelgarnitur zu einem Deckelstab, in dem lediglich die Sensoren untergebracht sind, offenbart. Entsprechend der DE 39 13 996 A1 sind an den Stirnseiten der Garnituren Fühler vorgesehen, die der Kardentrommel zugeordnet sind und den Abstand zu gegenüberliegenden Gegenstücken am Deckel messen. Auch ist es bekannt, den Abstand der Gleitschuhe, die über Deckelköpfe an den Deckelstäben angebracht sind, zur Deckelgarnitur zu ermitteln. Aus diesen indirekten Abstandsmessungen wird dann auf den unmittelbaren Abstand der Garniturspitzen geschlossen.

Die vorgenannten Vorrichtungen und Verfahren haben den Nachteil, dass sie einerseits aufwendig sind und andererseits oftmals nur über eine grössere Anzahl von Garniturnadeln oder Garniturzähnen gemittelte Abstandwerte liefern. Zusätzlich ist eine Eichung basierend auf einer Handmessung notwendig.

Die Aufgabe der Erfindung ist es die Nachteile des Standes der Technik zu beheben und eine Messung eines Abstandes von zwei sich gegenüberliegenden Bauteilen resp. Garnituren mit einer hohen Genauigkeit zu ermöglichen.
Eine weitere Aufgabe der Erfindung ist es, den Abstand auch zwischen zwei sich gleichläufig oder gegenläufig bewegenden Bauteilen resp. Garnituren mit einer hohen Genauigkeit messen zu können.
Weiter ist die Aufgabe der Erfindung eine Kollisionsgefahr der relativ zueinander bewegten Bauteile resp. Garnituren zuverlässig zu erkennen und anzuzeigen.

Diese Aufgabe wird gelöst durch ein direktes Messverfahren mittels Funkenentladung. Es werden mindestens zwei Funkenentladungen zwischen den sich gegenüberstehenden Bauteilen resp. Garnituren provoziert, deren Zeitabstand und/oder Frequenz gemessen und daraus der Abstand zwischen den Bauteilen resp. Garnituren errechnet. Unter der Frequenz der Entladungen ist die Anzahl der Entladungen pro Zeiteinheit zu verstehen.

Die Vorteile der Erfindung liegen insbesondere darin, dass eine direkte Abstandsmessung zwischen zwei Bauteilen resp. den Spitzen von relativ zueinander bewegten Garnituren durchgeführt werden kann. Indem die Bauteile resp. die Garniturspitzen selbst als Elektroden herangezogen werden, ist zudem eine äusserst kostengünstige Lösung realisiert. Durch die provozierten elektrischen Entladungen in Form von Spannungsentladungen, sogenannten Funkenentladungen, kann insbesondere bei einer Abfolge von mindestens zwei Funkenentladungen aus der dabei auftretenden Frequenz, resp. aus der Dauer zwischen den Funkenentladungen, geschlossen werden, wie gross der Abstand zwischen den besagten Bauteilen resp. Spitzen ist. Mittels des erfindungsgemässen Verfahrens lassen sich derartige direkte Abstandsmessungen auch in kleinsten Abstandsbereichen, insbesondere zwischen 0,01 und 0,5 mm realisieren. Zusätzlich ermöglicht die Erfindung beispielsweise bei einer Karde individuelle Abstandmessungen zwischen jeder einzelnen Deckel- zur Trommelgarnitur und/oder zwischen bestimmten Zonen der Deckelgarnitur zur Trommelgarnitur, wie später erläutert wird. Zudem bietet die Erfindung den Vorteil, dass Messungen unabhängig von Materialeigenschaften, Feuchtigkeit und Temperatur durchgeführt werden können, wenn diese Effekte herausgemittelt werden. Die Messung der Frequenz resp. des Zeitabstandes zwischen den Funkenentladungen hat zudem den Vorteil, dass umso geringer der Abstand der Spitzen ist desto höher ist die Frequenz resp. desto näher aufeinander folgen sich die Funkenentladungen. Dadurch ergibt sich eine höhere Messgenauigkeit mit abnehmendem Abstand zwischen den Spitzen, was eine präzise Einstellung von Spitzenabständen von unter 0,5 mm begünstigt. Die Frequenz steigt exponentiell mit der Verkleinerung des Abstandes zwischen den Garnituren und kann über 1'200 kHz erreichen bei Abständen kleiner als 0,05 mm.

Vorzugsweise ist eine Auswerteeinheit vorgesehen, welche die erfindungsgemässe Abstandsermittlung zwischen den Garniturspitzen auf Grundlage der vorgenannten Parameter (Frequenz resp. Zeitabstand der Entladungen) auswertet. Eine derartige rechnergestützte Auswertung liefert schnell und präzise Werte zur verbesserten Einstellung der Garniturspitzen zueinander, was die Leistungsfähigkeit der Maschine erhöht. Die Auswerteeinheit ist in der Lage Fremdeinflüsse, welche zu Störungen der Signalfolge führen können durch Erkennen von Fehlsignalen auszublenden. Vorzugsweise wertet die Auswerteeinheit die Messwerte aus und gibt dem Bedienerbeispielsweise auf einem Maschinendisplay - Hinweise, wie er den Abstand zwischen den Garnituren zu verändern hat. Auch können dem Bediener alternativ oder zusätzlich Hinweise über den Neigungswinkel (Anzugswinkel) der Deckelgarnitur gegenüber der Trommel ausgegeben werden, wie später zu erläutern sein wird.

Erfindungsgemäss wird die Frequenz der Funkenentladungen resp. der zeitliche Abstand zwischen zwei Funkenentladungen von einem zur Zählung der Funkenentladungen geeigneten Messmittel registriert. Mit einer Spannungsquelle wird eine bestimmte Potentialdifferenz zur Verfügung gestellt. Mit Hilfe eines Impulsgenerators wird ein zeitlicher Verlauf eines Spannungsaufbaus zwischen den Funkenentladungen wie z.B. die Aufladecharakteristik eines Kondensators, eine sogenannte Kennlinie, vorgegeben. Die Zeit zwischen zwei aufeinanderfolgenden Entladungen ist damit bestimmt durch die Kennlinie des Impulsgenerators und dem zu messenden Abstand zwischen den Bauteilen. Ist der Zeitabstand zwischen zwei Funkenentladungen bekannt, so ist mit Hilfe der Kennlinie eine präzise Ermittlung des Abstandes möglich.

In einer bevorzugten Ausführung wird über den Hauptaufladestrom gemäss der Kennlinie eine zusätzliche elektrische Schwingung überlagert die mit einem Hochfrequenz-Oszillator erzeugt wird. Durch diese Überlagerung wird eine kontrollierte Ionisierung der Umgebungsluft der Bauteile resp. der zu messenden Punkte erreicht, was zu einer Verbesserung der Reproduzierbarkeit der Funkenentstehung führt. Mit einer hohen Reproduzierbarkeit können Fehlmessungen reduziert und damit eine höhere Messgenauigkeit erreicht werden. Die Frequenz der Überlagerung sollte sich vorzugsweise in einem Bereich von einer sechs bis zehnfach höheren Frequenz als die Frequenz der Funkenentladungen bewegen.

Für die Spannungserzeugung bevorzugt ist eine maximale zwischen den Garniturspitzen erzeugte abstandsbezogene Potentialdifferenz, welche die Durchschlagfestigkeit der Luft (ca. 3'200 V/mm) überschreitet und abhängig vom erwünschten Messbereich im Bereich zwischen 1 und 10'000 V liegt. Es hat sich als vorteilhaft herausgestellt, wenn dieser Bereich zwischen 2'000 und 5'000 V und vorzugsweise zwischen 2'500 und 3'500 V einstellbar ist. Die rechnerische Durchschlagspannung liegt bei einem Kardierspalt von ca. 0,4 mm bei ca. 1'280 V, bei einem Kardierspalt von 0.005 mm bei ca. 16 V und bei einem Kardierspalt von 0.001 mm bei ca. 3.2 V.

Die Entladungsenergie bei Funkenentladungen sollte sich auf unter 10 mJ belaufen, da ansonsten eine Brand- und Elektroschockgefahr bestünde. Auch würden die Garniturspitzen durch Elektroerosion über Massen abgenützt werden. Vorzugsweise liegt die Entladungsenergie sogar unter 5 mJ und bevorzugt unter 1 mJ. Bei diesen Entladungsenergien besteht keine Gefahr für den Bediener, falls er den Stromkreis mit seinem Körper versehentlich kurzschliesst.

Da die Garnituren in einer Textilmaschine relativ zueinander bewegt werden, wird bevorzugt ein Impulsgenerator mit einer verstellbaren Kennlinie (Aufladecharakteristik) verwendet. Dies bedeutet, dass der zeitliche Verlauf des Spannungsaufbaus zwischen den Funkenentladungen einstellbar ist. Die Bewegung der beiden Garnituren kann dabei gleichläufig oder gegenläufig sein oder es bewegt sich nur eine der beiden Garnituren. Die Geschwindigkeit der Bewegung der beiden Garnituren kann dabei gleich oder verschieden sein. Die Kennlinie wird vorteilhafterweise derart eingestellt, dass die relative Bewegung zwischen den zu messenden Garniturspitzen keinen Einfluss auf die Genauigkeit der Messung hat, was eine Bewegung zwischen den Garnituren von weniger als 0.5 mm, bevorzugt 0.03 mm, zwischen zwei Funkenentladungen bedeutet. Dadurch können beispielsweise bei einer Karde Unregelmässigkeiten der Trommel selbst keinen störenden Einfluss auf die Messung haben.

Besonders bevorzugt weist die erfindungsgemässe Maschine ein zusätzliches Elektrodenpaar auf, zwischen denen Spannungs- bzw. Funkenentladungen provoziert werden. Dieses Elektrodenpaar dient als Referenzmesseinheit, wobei der Abstand der beiden Elektrodenspitzen bekannt ist. Dieser Abstand ist gemäss einer bevorzugten Ausführungsform definiert veränderbar, wobei auch der neue Abstand der Elektrodenspitzen bekannt sein muss. Das zusätzliche Elektrodenpaar weist bevorzugt eine ähnliche Oberflächengeometrie wie die Garnituren auf. Aufgrund des bekannten Abstandes zwischen den Referenzelektroden und der vergleichbaren Oberflächengeometrie können Einflüsse der Oberflächengeometrie auf die Messwerte der Funkenentladungen zwischen den Garnituren mittels der Auswerteeinheit reduziert werden. Dieses Vorgehen erhöht somit die Genauigkeit der Abstandsberechnung zwischen den Garniturspitzen.

Das zusätzliche Referenzelektrodenpaar kann zusätzlich dazu verwendet werden, die Einflüsse des Mikrobetriebsklimas auf die Messwerte der Funkenentladungen zwischen den Garnituren herauszurechnen. Hierzu sind die Referenzelektroden in das gleiche Mikrobetriebsklima wie die Garnituren zu platzieren. Unter dem Begriff "Mikrobetriebsklima" sind insbesondere die Lufttemperatur, die Luftfeuchtigkeit, die Luftgeschwindigkeit, die Anwesenheit von ionisierenden Partikeln und/oder Restionisationen zu verstehen. Die vorgenannten Parameter haben Einfluss auf den Corona-Effekt und somit auf die zeitliche Abfolge der Funkenentladungen.

Vorteilhafterweise ist das zusätzliche Elektrodenpaar ausserhalb des Kardierbereichs der als Karde ausgebildeten Spinnereivorbereitungsmaschine angeordnet, um den Kardiervorgang nicht zu beeinflussen bzw. die Effizienz nicht herabzusetzen. Es hat sich zudem als vorteilhaft erwiesen, wenn das zusätzliche Elektrodenpaar in einem Raum angeordnet ist, in den bei Betrieb der Spinnereivorbereitungsmaschine im wesentlichen keine Fasern eindringen können, so dass diese keine faserbedingten Durchschläge oder sonstige Beeinflussung der Messergebnisse mit den Referenzelektroden verursachen können. Wenn durch den Messraum des Weiteren ein Luftstrom geleitet wird, der im wesentlichen keine Fasern enthält und aus dem Kardierbereich stammt, ist das Mikrobetriebsklima im Messraum im wesentlichen identisch mit demjenigen zwischen den beiden Garnituren.

Bei einer bevorzugten Ausführungsform ist die eine Garnitur als Deckelgarnitur einer Karde und die andere Garnitur als zugeordnete Trommelgarnitur ausgebildet. Gerade der Abstand zwischen diesen beiden Garnituren ist relevant für das Kardierergebnis, so dass eine optimale Einstellung von grossem Vorteil ist. Da praktisch alle am Kardierprozess beteiligten Garniturspitzen als Elektroden herangezogen werden können, ist eine äusserst präzise Abstandsermittlung und damit Abstandseinstellung möglich.

Entsprechendes gilt im Falle eines Krempels, bei dem die Erfindung ähnlich umgesetzt sein kann wie bei einer Karde.

Insbesondere bei der Abstandsermittlung zweier sich relativ zueinander bewegenden Garnituren (entweder im Gleich- oder Gegensinn) ist das erfindungsgemässe Verfahren mit Vorteil anwendbar, da aufgrund der Bewegungen der beteiligten Bauteile sowie den Kardierbedingungen die Gefahr einer raschen Abstandsveränderung besteht und somit durch Nachregulieren der Garnituren zueinander hierauf schnell reagiert werden kann.

Um eine Funkenentladung zwischen den Spitzen der sich momentan gegenüber angeordneten Garniturspitzen provozieren zu können sind entsprechende Kontakte für den Aufbau einer Potentialdifferenz notwendig. Es bietet sich an, im Falle der Abstandsmessungen zwischen den Deckel- und Trommelgarnituren entsprechende Schleifkontakte an den Deckelstäben und/oder der Trommelwelle vorzusehen, wobei mindestens einer der Kontakte mit dem Impulsgenerator verbunden ist. Der andere Kontakt kann geerdet oder ebenfalls mit dem Impulsgenerator verbunden sein.

Es gibt dann verschiedene Möglichkeiten, die Frequenz zu bestimmen, resp. die Zeit von einer Funkenentladung zur Nächsten zu messen. Bei einer Möglichkeit werden beispielsweise alle Deckel gemessen, wobei beispielsweise an bestimmten Messpunkten entlang der Deckelgarnitur fixe Messpunkte vorgesehen sind, mit denen jeder Deckel während seiner Bewegung in elektrischen Kontakt kommt. Hierzu sind an den Messpunkten jeweils kurze Schleifkontakte bzw. Schleifbürsten vorgesehen, die nur jeweils einen einzigen Deckel erfassen. Der Vorteil liegt in der Möglichkeit der Überwachung einzelner Deckel, um beispielsweise eventuelle Schäden oder die individuelle Garniturabnutzung zu ermitteln.

Bei einer weiteren Möglichkeit wird über einen grösseren, gegebenenfalls sogar über den gesamten, der Trommel gegenüberliegenden Laufbereich der Wanderdeckel gemessen. Bei einer derartigen Messung über den gesamten Kardierbereich wird vorzugsweise ein langer Schleifkontakt bzw. eine lange Schleifbürste verwendet, welche sich über die gesamte Laufbahn der Wanderdeckel erstreckt. Der Vorteil liegt hierbei in der Möglichkeit der Überprüfung und Überwachung der Positionsgenauigkeit des Flexibelbogens, der Trommel, des Trommelschildes und/oder der Deckelstäbe im Betrieb, d.h. bei den während der Produktion entstehenden thermischen Bedingungen.

Selbstverständlich ist auch eine Kombination der beiden Methoden möglich, wobei z.B. an einer Maschinenseite die kurzen Schleifbürsten und an der anderen die lange Schleifbürste vorgesehen sind.

Eine elektrische Isolierung zwischen den beiden Garnituren ist vorteilhafterweise dergestalt ausgebildet, dass die Deckelstäbe stirnseitig auf zwei Gleitbogen aufliegen, wobei diese Gleitbogen aus elektrisch nicht leitfähigem Kunststoff bestehen oder mit einer derartigen Kunststoffschicht versehen sind. Derartige Gleitbogen sind vorzugsweise Flexibelbogen, auf denen die Deckelköpfe der Deckelstäbe während des Vorbeiwanderns an der Trommelgarnitur geführt werden. Eine andere Möglichkeit besteht darin, dass die Deckelköpfe mit Gleitschuhen aus nicht leitfähigem Kunststoff versehen sind, welche auf den Flexibelbogen aufliegen. Diese elektrische Isolation gewährleistet die Funkenentladung zwischen den Garniturspitzen.

Eine hohe Genauigkeit der Abstandsermittlung kann erhalten werden, wenn die Potentialdifferenzen zur Funkenentladung zwischen den Garnituren über die gesamte Kardierbreite erzeugt werden. Die erfindungsgemässe Vorrichtung bzw. das erfindungsgemässe Verfahren ermöglichen somit eine grossflächige Elektrode, der gegenüber den bekannten Messelektroden eine wesentlich grössere Messfläche abdeckt. Wird auf dieser Fläche eine Funkenentladung ausgelöst, erhält der Bediener einen Hinweis auf den kleinsten vorhandenen Abstand aller sich gegenüberliegenden Garniturspitzen und kann dementsprechend reagieren.

Der oben beschriebene Schleifkontakt am Deckelstab hat üblicherweise aufgrund der Garniturnadelanbringung am Garniturstreifen elektrischen Kontakt mit allen Garniturspitzen. Daher lässt sich in diesem Fall nicht der genaue Ort der Funkenentladung lokalisieren. Demgegenüber liefert eine ortsaufgelöste Messung präzisere Aussagen. Hierzu kann zwischen Deckelstab und Garniturstreifen mindestens ein zumindest abschnittsweise elektrisch leitendes Flächenelement vorgesehen sein, welches elektrischen Kontakt mit den, den Garniturspitzen abgewandten Garniturenden hat. Bei Funkenentladungen fliesst somit Strom von den Garniturspitzen über den Kontakt der Garnituren mit dem elektrisch leitenden Flächenelement zur Spannungsquelle, um den Stromkreis zu schliessen. Dieses mindestens eine elektrisch leitende Flächenelement kann beispielsweise an bekanntermassen relevanten Stellen des Garniturstreifens am Deckelstab lokalisiert sein.

Gemäss einer vorteilhaften Ausführungsform weist das mindestens eine Flächenelement mehrere elektrisch voneinander isolierte Leitzonen verteilt auf das Flächenelement auf. Hierbei bietet es sich an, diese Leitzonen über die Länge und/oder über die Breite des zugeordneten Garniturstreifens zu verteilen, um spezielle Ortsaussagen über die Funkenentladungen und damit über den geringsten Abstand der zugeordneten Garniturspitzen in den jeweiligen Abschnitten zu treffen. Über entsprechende Abgriffe und Signalleitungen sind diese Leitzonen jeweils mit der Spannungsquelle verbunden, wobei in dieser Verbindung eine Frequenzmessung vorgesehen ist, sodass bei Funkenentladungen die Auswerteeinheit aufgrund der unterschiedlichen Stromkreise die Leitzonen voneinander zu unterscheiden vermag.

Ganz allgemein kann durch Signalauswertung von verschiedenen elektrisch voneinander isolierten, einem Deckel zugeordneten Stromkreisen, die verschiedenen Kardierzonen des Deckels zugeordnet sind, der Zustand der Spitzen in den verschiedenen Kardierzonen beurteilt werden.

In einem ähnlichen, ebenfalls vorteilhaften Verfahren kann anhand von derartigen Signalen, die verschiedenen Kardierzonen des Deckels zugeordnet sind, der Zustand des Flexibelbogens beurteilt werden, wenn diese Kardierzonen in Umlaufrichtung gesehen hintereinander angeordnet sind.

Gemäss einer Weiterentwicklung der Erfindung kann der durch das erfindungsgemässe Verfahren ermittelte Garniturspitzenabstand herangezogen werden, um automatisch den Abstand optimal einzustellen. Hierzu sind entsprechende Einstellmittel vorgesehen, die auf Grundlage der rechnerischen Auswertung und/oder der optischen Kontrolle seitens des Bedieners den Garniturabstand einstellen. Vorzugsweise gibt die Auswerteeinheit nach Ermittlung des Garniturabstandes Stellbefehle an die Einstellmittel. Diese Einstellmittel sind beispielsweise Stelltriebe, die auf den Kurvenverlauf des Flexibelbogens einwirken, um die Gleitschuhe der Deckelstäbe anzuheben oder abzusenken, um damit den Garniturspitzenabstand zu vergrössern bzw. zu verkleinern.

Gemäss einer Weiterentwicklung des erfindungsgemässen Verfahrens zum Einstellen des Abstandes der Garniturspitzen wird vorgeschlagen, dass eine sukzessive Einstellung der beiden Deckelstabstirnseiten durchgeführt wird. Hierzu wird zunächst auf der ersten Seite der Abstand derart verringert, dass auf Grundlage der registrierten und/oder beobachteten Funkenentladungen ein gewünschter Abstandswert δ eingestellt wird. Dieser kann unter Umständen mit Hilfe der konventionellen Techniken der in den Kardierspalt einzuführenden Messstäbe kontrolliert werden. Dieser Abstandswert δ entspricht einem Messwert T₂ = f(δ). Im Anschluss daran wird die zweite Stirnseite des entsprechenden Deckelstabs mit Hilfe des Flexibelbogens angenähert. Solange der Abstand zwischen der neu eingestellten Deckelseite zur Trommel δ_{N} ≥ δ beträgt, entstehen wegen der Neigung des Deckels Funken an der ersten Deckelseite; somit bleibt auch der Messparameter F₂ = f(δ) zunächst unverändert. Sobald aber der Abstand zwischen der zweiten Deckelseite zur Trommel δ_{N} < δ wird, wechselt die Funkenbildung die Seite und der neue Frequenzwert beträgt T₃ = f(δ_{Neu}) < T₂. Da in diesem Fall der zweite Abstand einen optimalen Wert unterschritten hat, wird anschliessend die zweite Stirnseite wieder angehoben, bis der neue Frequenzwert T₃ = T₂. Damit wird erreicht, dass auch der neue Abstandswert δ_{Neu} den Sollwert δ annimmt. Hierbei steht nun der Deckel parallel zur Trommel. Diese Verfahrensweise gewährleistet einen im wesentlichen gleichen Abstand über die gesamte Kardierbreite des Deckelstabs.

Bei einer besonders einfachen aber wirkungsvollen Anwendung der erfindungsgemässen Messanordnung wird der Stromfluss durch die Spannungsquelle als Kollisionswarnung bei Unterschreiten eines vorgegebenen Abstandes der Garniturspitzen herangezogen. Wenn die Spitzen sehr dicht beieinander sind, resp. bei einzelnen Spitzen eine Berührung stattfindet, wird ein Kurzschluss ausgelöst, sodass keine einzelnen Funkenentladungen mehr stattfinden. Entsprechend fliesst ein ununterbrochener elektrischer Strom über die Spannungsquelle, so dass ein Kollisionshinweis mittels eines entsprechenden Signalapparates, z. B. akustisch und/oder optisch, ausgegeben wird und/oder eine geeignete Massnahme ergriffen wird, um die Kollision aufzulösen.

Bei einer weiteren Anwendung der erfindungsgemässen Messanordnung wird das Messverfahren als eine mobile von der Textilmaschine unabhängige Vorrichtung vorgesehen. Die Vorrichtung kann in dieser Bauart an eine beliebige Maschine angeschlossen werden um Abstände zwischen zwei Bauteilen zu messen. Die zu messenden Bauteile müssen jedoch die entsprechenden Kontakte aufweisen um die Vorrichtung anschliessen zu können. Die mobile Vorrichtung kann in dieser Bauart alle notwendigen Komponenten enthalten, welche nicht zum Betrieb der Textilmaschine erforderlich sind.

Bei Messungen der vorbeschriebenen Art kann die Elektromagnetische Verträglichkeit (EMV) aufgrund des steilen Anstiegs des Entladungsstromes und raschen Entladungsfolgen zu einem Problem werden. Eine Optimierung der EMV ist mit der im Folgenden beschriebenen Verbesserung der erfindungsgemässen Vorrichtung möglich. Ebenfalls kann mit dieser Verbesserung eine aufgrund der Entladungen an den Enden der Garniturspitzen auftretende Elektroerosion weitgehend vermieden werden. Elektroerosion bedeutet, dass bei jeder Funkenentladung durch einen thermischen Effekt ein kleiner Teil der Nadelspitze verloren geht, was auf die Dauer zu Schädigungen der Garniturspitzen führen kann.
Die Sicherstellung der Elektromagnetischen Verträglichkeit ist umso schwieriger desto grösser die Störkapazität des zu messenden Bauteils ist. Die Störkapazität ist abhängig vom Abstand zwischen den beiden Bauteilen zwischen denen eine Potentialdifferenz besteht und von der Grösse der beiden Flächen die sich gegenüberstehen. Bei der Anwendung in einer Karde entspricht diese Fläche der auf die Trommel projizierten Fläche des Deckels. Die Störkapazität wird jedoch vernachlässigbar bei Verwendung von kleinen Bauteilen, respektive kurzen und schmalen Deckeln bei Karden, und kleinflächigen Leitzonen in den Deckeln.

Bei vernachlässigbarer Störkapazität kann die EMV optimiert werden durch die Verwendung eines einfachen oder verteilten Widerstandes, beispielsweise in Form eines Entstörwiderstandskabels, in der Verbindung zwischen dem Impulsgenerator und dem Bauteil respektive dem Deckel. Durch die Verwendung eines Entstörwiderstandskabels wird der maximale Entladungsstrom begrenzt und die Entladungszeit verlängert, ohne dass dadurch die auf den Deckel übertragene Zündspannung vermindert wird. Die Verwendung solcher Entstörwiderstandskabel ist bekannt aus der Automobiltechnik, wo sie seit Jahren als Zündkabel verwendet werden.

Bei nicht vernachlässigbarer Störkapazität kann die EMV optimiert werden durch den Einbau eines über die ganze Bauteilfläche, respektive über die ganze Deckelgarnitur-Rückfläche, verteilten Entstörwiderstandes (Widerstandsmatte oder elektrisch leitende Farbe) zwischen dem Bauteil und den zu messenden Spitzen, respektive dem Deckel und der zugehörigen Garnitur. Die gesamte im Deckel gespeicherte elektrische Ladung (Spannung) würde während der Entladung, völlig unabhängig von der äusseren Quelle (Impulsgenerator) an einer der Garniturspitzen, welche augenblicklich den kleinsten Abstand zur Trommelgarnitur aufweist, übergeben, falls kein flächenverteilter Entstörwiderstand eingebaut wird. Der eingebaute flächenverteilte Entstörwiderstand begrenzt den dabei fliessenden Entladungsstrom und verlängert die Entladungszeit. Unter einem flächenverteilten Entstörwiderstand ist eine Widerstandsmatte oder eine elektrisch leitende Schicht zu verstehen, beispielsweise ein elektrisch leitender Kunststoff, eine leitende Farb- oder Harzschicht. Um beispielsweise ein Polymer elektrisch leitend zu machen, baut man geringe Mengen bestimmter Chemikalien in den Kunststoff ein. Mit Zusatz von Nanopartikeln ist es möglich Farbstoffe elektrisch leitend zu gestalten.

In einer bevorzugten Ausführung ist der Garniturstreifen beziehungsweise die Fundation der Deckelgarnitur selbst als Entstörwiderstand ausgeführt, beispielsweise durch in die Fundation eingebaute elektrisch leitende Bestandteile in Form von Drähten oder Partikeln. Dadurch kann auf den Einbau einer separaten Widerstandsmatte verzichtet werden.

Eine weitere Verbesserung der erfindungsgemässen Vorrichtung und des Verfahrens wird durch eine sogenannte unterbrochene Entladung erreicht. Dabei wird nach dem Auslösen einer Entladung der Entladungsprozess unterbrochen und die im Deckel gespeicherte elektrische Ladung entnommen und entweder über einen elektrischen Last-Widerstand abgeleitet oder über einen energierekuperativen Kondensator in die Energiequelle zurückgeführt und für die nächste Entladung gespart. Dies wird erreicht durch den Einbau eines Last-Widerstandes zur Ableitung der Energie oder eines energierekuperativen Kondensators zur Zwischenspeicherung der Energie und den notwendigen Kommutationselementen zur Umkehrung des Energieflusses. Bei einer beginnenden Entladung wird der Energiefluss zwischen dem Impulsgenerator und dem Deckel durch das Schalten eines ersten Kommutationselementes unterbrochen und durch die Schaltung eines zweiten Kommutationselementes in den Last-Widerstand respektive den Kondensator abgeführt, wodurch die Potentialdifferenz zwischen Trommel und Deckel auf Null fällt und damit die Entladung abrupt unterbrochen wird. Bei Verwendung eines Last-Widerstandes wird die Energie direkt abgeleitet. Bei Verwendung eines Kondenstors wird anschliessend der Kondensator durch Schalten des zweiten Kommutationselements wieder vom Deckel getrennt und die Energie über das dritte Kommutationselement in die Spannungsquelle zurückgeführt.
Die beginnende Entladung wird durch eine geeignete Messung festgestellt. Zur Feststellung des Entladungsbeginns und zur Ansteuerung der Kommutationselemente geeignete Messverfahren sind beispielsweise eine Spannungs- oder Strommessung oder eine Ultraviolett-Fotodiode. Mit Hilfe der Fotodiode kann das bei einer Funkenentladung auftretende typische "Leuchten" erfasst und in ein elektrisches Signal umgewandelt werden.

Als Weiterentwicklung der unterbrochenen Entladung ist die Ausführung einer sogenannten Vorentladung eine weitere Verbesserung der erfindungsgemässen Vorrichtung und des Verfahrens. Bei einer Vorentladung wird die Vollentladung im eigentlichen Ablauf von aufeinanderfolgenden Entladungen übergangen; die Vorentladung ist eine Vorstufe der Vollentladung. In bezug auf die Ladung der Bauteile erfolgt eine Art Teilentladung. Der Vorteil dieser Ausführung liegt in einer gegenüber der unterbrochenen Entladung besseren elektromagnetischen Verträglichkeit und einer fast vollständig vermeidbaren Elektroerosion durch den fehlenden Funkenschlag.

Bei steigender Spannung wird im lokalen Einsatzfeld (in der Nähe der Garniturspitzen) nach einer bestimmten Zeit der Zündwert für eine sichtbare (Korona-) Entladung erreicht. Bei Erreichen dieses Zündwertes beginnt eine Glimmentladung. Steigt die Spannung weiter wird die Glimmentladung zu einer Streamer-Entladung anwachsen um bei weiterem Spannungsanstieg Leader-Entladungen entstehen zu lassen. Diese drei Formen von Entladungen (Glimm-, Streamer- und Leader-Entladung) werden allgemein als Vorentladungen bezeichnet. Erst bei Erreichen einer Feldstärke von mehreren kV/mm im Bereich zwischen den Garnituren würde eine Vollentladung stattfinden. Die Weiterentwicklung besteht nun darin die Versorgung der zu messenden Bauteile in einer Art und Weise zu unterbrechen, dass sich eine beginnende Entladung nicht über eine Leader-Entladung hinaus entwickelt, sodass eine Vollentladung verhindert werden kann. Um dies zu erreichen bestehen mehrere Möglichkeiten.

Eine Messung der elektrischen Parameter der Einspeisung in den Deckel (Impulsgenerator) ist eine Möglichkeit der Feststellung einer bevorstehenden Voll-Entladung, da kurz vor der Vollentladung die Spannung über die Entladungsstrecke abrupt ansteigt.
Eine zweite Möglichkeit ist die Messung der Vorentladungsströme. Aufgrund des Stromflusses ist ebenfalls eine Steuerung der Spannungsversorgung des Deckels möglich. Das Einsatzfeld zwischen den beiden Spitzen kann als Ersatzschaltbild wie ein Kondensator betrachtet werden. Bei einem Spannungsanstieg welcher zu einer Vorentladung führt ist dieser Kondensator als dreiteilig zu betrachten. Aufgrund der Glimmentladungen an beiden Spitzen werden die beiden äusseren Kondensatoren kurzzeitig entladen, was sich als Stoss-Ströme bemerkbar macht und eine Scheinladung in Bewegung setzt. Mit steigender Spannung werden die Abstände zwischen diesen Stoss-Strömen immer kürzer. Dies führt nun dazu, dass mit Hilfe einer Messung dieses Phänomens eine Steuerspannung bestimmt werden kann, bei welcher die Versorgungsspannung abgesenkt wird um einen neuen Zyklus zu beginnen. Dadurch wird die Funkenentladung unterbrochen, bevor eine Vollentladung ablaufen kann. Die bei einer Vollentladung erzeugten Nebenwirkungen, wie Elektroerosion und eine schlechte elektromagnetische Verträglichkeit, treten somit nicht auf, ohne dass die Messung der Zeitabstände zwischen den einzelnen Funkenentladungen beeinflusst wird. Als Messmethode zur Bestimmung des Zeitpunktes einer bevorstehenden Vollentladung können bereits bekannte Systeme verwendet werden, beispielsweise die PRPDA-Methode (Phase Resolved Partial Discharge Analysis) oder die Ermittlung der Verschiebung zwischen Scheinstrom und Wirkstrom im Einsatzfeld (die Erfassung des TE-Knickes). Die Stromstösse der Vorentladung können sowohl galvanisch wie auch akustisch oder über schallempfangende Mittel (VHF, UHF) empfangen werden.

Die Anwendung einer Folge von reinen Vorentladungen hat den Nachteil, dass die Messung mit fortschreitender Dauer an Genauigkeit verliert. Die Vorentladungen sind in ihren Eigenschaften abhängig von der Mikrogeometrie der zu messenden Spitzen, im Gegensatz zu den Vollentladungen, welche im wesentlichen nur abhängig sind vom Abstand zwischen den zu messenden Spitzen. Um diesen Nachteil zu beheben ist eine Messung aus mehreren Zügen von Voll- und Vorentladungen aufzubauen, dies kann beispielsweise in einem Verhältnis von 5% Vollentladungen und 95% Vorentladungen bestehen. Durch das Einstreuen der Vollentladungen werden die Randbedingungen für die Vorentladungen (Abhängigkeit von der Mikrogeometrie) zyklisch aktualisiert. Dies resultiert einerseits in einer Maximierung der Messgenauigkeit und andrerseits in einer Minimierung der Entladungsenergie. Die damit gemachte Eichung kann als Information über den Zustand der Spitzen der Garnituren verwendet werden.

Im folgenden wird die Erfindung anhand der Figuren näher erläutert. Es zeigen:
- **Figur 1**: eine schematische Seitenansicht einer Karde
- **Figur 2**: eine Seitenansicht eines Deckelstabs mit einem Teil einer Kardentrommel
- **Figur 3**: eine Vorderansicht eines Deckelstabs mit einem Teil einer Kardentrommel
- **Figur 4**: eine schematische Darstellung der Funkenerzeugung zwischen einer Deckelgarnitur und einer Trommelgarnitur
- **Figur 5**: ein Schaltbild einer Messanordnung
- **Figur 5a**: ein Schaltbild einer bevorzugten Messanordnung
- **Figur 6**: ein Spannungs-Zeit-Diagramm sowie ein Strom-Zeit-Diagramm und Darstellung der Funkenentladungen und des Abstandes
- **Figur 6a**: ein Spannungs-Zeit-Diagramm sowie ein Strom-Zeit-Diagramm und Darstellung der Funkenentladungen und des Abstandes
- **Figur 7**: ein Faserleitelement in Seitenansicht mit integriertem Referenzelektrodenpaar, geschnitten entlang der Linie I-I in der Figur 8
- **Figur 8**: die Anordnung der Figur 7 in Aufsicht
- **Figur 9**: eine zweite Ausführungsform eines Referenzelektrodenpaares in Seitenansicht
- **Figur 10**: eine dritte Ausführungsform eines Referenzelektrodenpaares in Seitenansicht
- **Figur 11**: eine perspektivische Sicht auf einen Deckelstab mit elektrisch leitendem Flächenelement zwischen Deckelstab und Garniturstreifen
- **Figur 12**: eine vergrösserte Seitenansicht eines Garniturstreifens mit eingesteckten Garniturnadeln sowie Flächenelement
- **Figur 13**: eine erste Ausführungsform elektrisch leitender Flächenelemente in Unteransicht
- **Figur 14**: eine zweite Ausführungsform elektrisch leitender Flächenelementen in Unteransicht
- **Figur 15**: eine schematische Seitenansicht einer Wanderdeckelanordnung mit drei unabhängigen Messstellen
- **Figur 16**: eine Darstellung der gemessenen Kardierspaltwerte an den drei Messstellen in Abhängigkeit der Zeit
- **Figur 17**: eine schematische Seitenansicht einer Wanderdeckelanordnung mit drei langgestreckten Schleifkontakten entlang des Kardierwegs eines Deckelstabs, und
- **Figur 18**: eine Darstellung von hypothetisch gemessenen Kardierspaltwerten an den drei Schleifkontakten in Abhängigkeit vom Messbereich β.
- **Figur 19**: ein Schaltbild einer Messanordnung nach Figur 5 mit Einbau eines Entstörwiderstandskabels
- **Figur 19a**: Spannungs-Zeit-Diagramm einer Entladung
- **Figur 20**: eine perspektivische Sicht auf einen Deckelstab mit einer Widerstandsmatte zwischen Deckelstab und Garniturstreifen
- **Figur 21**: eine vergrösserte Seitenansicht eines Garniturstreifens mit eingesteckten Garniturnadeln sowie einer Widerstandsmatte zwischen Deckelstab und Garniturstreifen bei Verwendung von Flächenelementen nach Figur 12 bis 14
- **Figur 22**: ein Schaltbild einer Messanordnung nach Figur 5 mit Einbau eines energierekuperativen Kondensators und den zugehörigen Kommutationselementen
- **Figur 23**: eine schematische Darstellung der Schaltzustände der Kommutationselemente in Zusammenhang mit dem Entladungsverlauf
- **Figur 24**: vereinfachte logarithmische Darstellung einer U,I - Gasentladungskennlinie
- **Figur 24a**: schematische Darstellung einer Glimm-Entladung
- **Figur 24b**: schematische Darstellung einer Streamer-Entladung
- **Figur 24c**: schematische Darstellung einer Leader-Entladung
- **Figur 25**: schematische Darstellung des Einsatzfeldes zur Erklärung der Vorentladung
- **Figur 26a**: schematische Darstellung eines Zuges mit einer Vollentladung und darauf folgenden Vorentladungen
- **Figur 26b**: schematische Darstellung der Messung einer Vorentladung mit einer pulsierenden Spannung

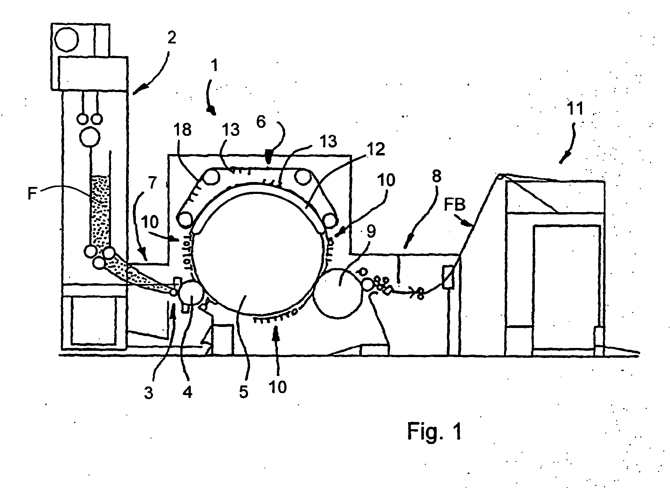

In der Figur 1 ist eine bekannte Karde 1 dargestellt, wobei Flocken F von einem Füllschacht 2 einer Speisewalze 3 und einem nachfolgenden Briseur 4 zugeführt werden. Die Karde 1 umfasst eine einzige Trommel 5 (Hauptzylinder oder sog. Tambour), die drehbar in einem Gestell getragen wird. Die Trommel 5 arbeitet in bekannter Weise mit einer Wanderdeckelanordnung 6, einem Faserspeisesystem 7, das insbesondere die Speisewalze 3 und den Briseur 4 umfasst, sowie einem Faserabnehmersystem 8 zusammen, wobei letzteres insbesondere einen sog. Abnehmer 9 aufweist. In den Vor-, Nach- und Unterkardierzonen der Karde 1 können Kardierelemente 10 angeordnet sein. Zwischen der Wanderdeckelanordnung 6 und den Kardierelementen 10 sind hier nicht näher gezeigte Faserleitelemente angeordnet, auf die später noch genauer eingegangen wird. Das Faserabnehmersystem 8 fördert das Faserband FB zu einer schematisch angedeuteten Faserbandablage 11.

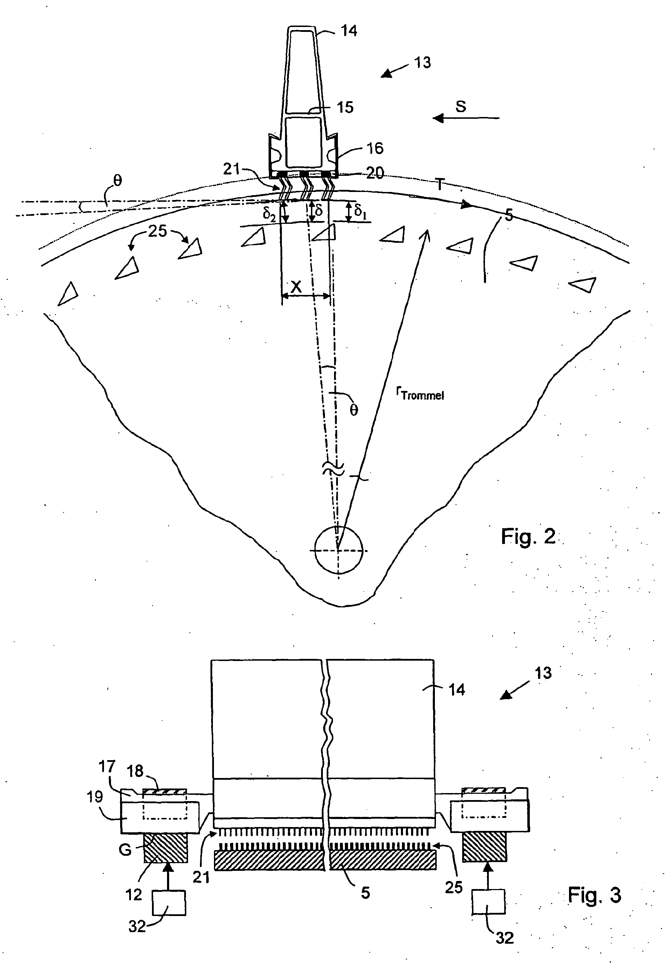

An der genannten Wanderdeckelanordnung 6 ist eine Vielzahl von Deckelstäben 13 vorgesehen, wobei in der Figur 1 nur einzelne Stäbe 13 schematisch abgebildet sind. Heute gebräuchliche Wanderdeckelanordnungen 6 umfassen eng beabstandet mehrere Deckelstäbe 13, die umlaufen. Hierzu werden die Deckelstäbe 13 in der Nähe ihrer jeweiligen Stirnseiten von Endlosbändern 18 (siehe Figur 3) getragen und gegen die Drehrichtung der Trommel 5 bewegt und auf der Unterseite der Wanderdeckelanordnung 6 an der Trommel 5 vorbeigeführt.

Figur 2 zeigt einen Deckelstab 13 von der Stirnseite her betrachtet. Ein Zentralabschnitt 14 des Deckelstabs 13 ist als Hohlprofil ausgebildet. Dabei ist ein Mittelsteg 15 zur Erhöhung der Stabilität des Deckelstabs 13 vorgesehen. An der Unterseite des Zentralabschnitts 14 ist ein Garniturstreifen 20 mit einer Deckelgarnitur 21, bestehend aus einer Vielzahl von Garniturnadeln, mittels Klipsen bzw. Klammern 16 befestigt. Der Deckelstab 13 wird in Bewegungsrichtung D an einer mit einer Trommelgarnitur 25 versehenen Aussenfläche einer Trommel 5 entlanggeführt, die sich in Richtung T dreht.
Die Trommelgarnitur 25 weist eine Vielzahl von schematisch dargestellten Garniturspitzen auf, die in Umfangsrichtung über die Trommeloberfläche verteilt sind.

In einem Kardierspalt δ zwischen der Deckelgarnitur 21 und der Trommelgarnitur 25 werden die, der Karde zugeführten Faserflocken bis zur Einzelfaser aufgelöst, die hierbei zudem eine erhebliche Längsorientierung erfahren. Ausserdem werden verbliebene Unreinheiten inklusive Staub ausgeschieden, ein Teil der vorhandenen Kurzfasern eliminiert sowie Nissen aufgelöst. Damit diese Aufgaben einwandfrei durchgeführt werden können, ist es wesentlich, dass die Weite des Kardierspalts δ welche nur einige wenige Zehntel eines Millimeters beträgt, korrekt eingehalten wird.

Figur 3 zeigt den Deckelstab der Figur 2 in einer gebrochenen Längsdarstellung. Er weist an seinen beiden Stirnseiten jeweils einen Deckelkopf 17 auf, der in den unteren Hohlabschnitt des Deckelstabs 13 eingesetzt ist. Jeder Deckelkopf 17 ist an seiner Unterseite mit einem Gleitschuh 19 versehen, der auf den beiden jeweils stirnseitig vom Deckelstab 13 angeordneten Flexibelbogen 12 unter Bildung einer Gleitfläche G aufliegt und entlang diesen Flexibelbogen 12 gleitet. In die Deckelköpfe 17 greifen zudem oberseitig die zwei Endlosriemen 18 ein. Der Übersichtlichkeit halber sind die Klammern 16 in der Figur 3 nicht dargestellt.

Aufgrund der Krümmung der Trommeloberfläche sowie des daran angepassten Verlaufs der Flexibelbogen 12 weisen die Garniturnadeln der Deckelgarnitur 21 über die Breite B des Deckelstabs 13 verschiedenen Abstände zur Trommelgarnitur 25 auf. In der Figur 2 sind dies die mit δ, δ₁ und δ₂ bezeichneten Abstände, wobei der mit δ bezeichnete Abstand der kleinste ist. Diese verschiedenen Abstände können - je nachdem, wo und wie Signale von Funkenentladungen über die Fläche des Garniturstreifens 20 abgegriffen werden - bei der Auswertung berücksichtigt werden. Insbesondere bei der Bestimmung des, mit Θ bezeichneten Anzugswinkels, der den Neigungswinkel der Deckelgarnitur 21 gegenüber der Trommel 5 angibt und eine Funktion der Abstände δ₁, δ₂ sowie dem Radius der Trommel (r_{Trommel}) sowie der genannten Breite X ist, werden die Funkenentladungen an den jeweils äusseren Garniturnadeln benötigt und ausgewertet. Ein dementsprechend ausgebildeter Signalabgriff wird später erläutert.

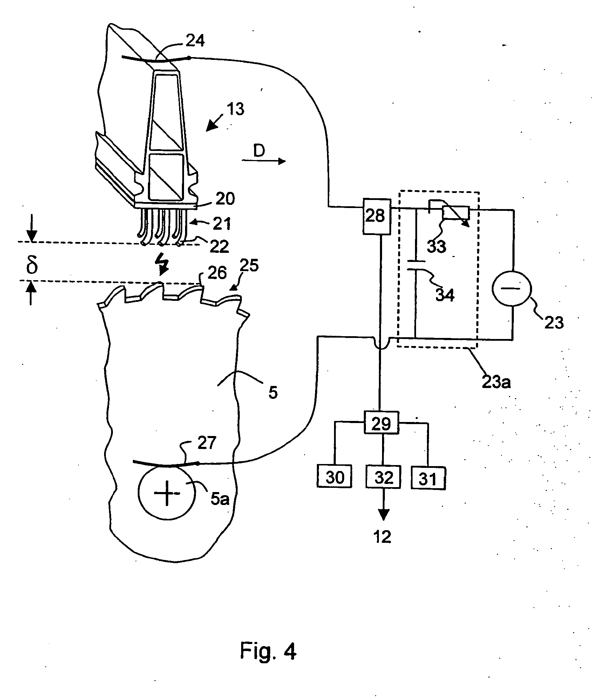

In der Figur 4 ist eine Messeinrichtung schematisch dargestellt. Eine Spannungsquelle 23 in Kombination mit einem Impulsgenerator 23a ist über eine Leitung mit einem stationären Schleifkontakt 24 verbunden. Der Schleifkontakt 24 kommt nacheinander in elektrischen Kontakt mit der Kontaktseite der jeweiligen, umlaufenden Deckelstäbe 13, die in Bewegungsrichtung D an dem Schleifkontakt 24 vorbeigeführt werden. An der Unterseite des Deckelstabs 13 ist der schon genannte Garniturstreifen 20 vorgesehen, in den die Garnitur 21 in Form von Garniturnadeln eingesteckt ist. Die Garniturnadeln durchdringen den Garniturstreifen 20, wobei die den Garniturspitzen 22 abgewandten Enden der Nadeln an der Unterseite des Deckelstabs 13 unter elektrischer Kontaktbildung anliegen. Der Deckelstab 13 ist gegenüber den beiden Flexibelbogen 12 elektrisch isoliert; beispielsweise sind die Flexibelbogen 12 oder die Gleitschuhe 19 hierzu aus Kunststoff gefertigt.

Der Die Spannungsquelle 23 ist über einen Impulsgenerator weiterhin über eine Leitung mit einem ortsfesten Schleifkontakt 27 verbunden, der an der Antriebswelle 5a der nur ausschnittweise dargestellten Trommel 5 anliegt. Über die Trommelwelle 5a und die Wände der Trommel 5 ist der Impulsgenerator 23a mit der Trommelgarnitur 25 elektrisch verbunden. Durch Anlegen einer veränderbaren Spannung kann von den Spitzen 22 der Deckelgarnitur 21 zu den Spitzen 26 der Trommelgarnitur 25 eine Funkenentladung erzeugt werden, die den Kardierspalt δ zwischen den Spitzen 22, 26 überbrückt und einen Kurzschluss im Stromkreis verursacht. Der Zeitabstand zwischen zwei Funkenentladungen und/oder die Frequenz der Funkenentladungen wird mit einem geeigneten Messmittel 28, beispielsweise einem galvanisch, optisch oder induktiv arbeitenden Messmittel, gemessen und an eine Auswerteeinheit 29 übermittelt. Die Auswerteeinheit 29 berechnet mittels eines hinterlegten Algorithmus den momentan bei der Funkenentladung bestehenden Abstand δ (Kardierspalt) zwischen den Garniturspitzen 22, 26. Über eine Anzeige 30 kann dieser Abstand beispielsweise angezeigt werden. Bei einem zu geringen Kardierspalt δ, der eine Kollision der Spitzen 22, 26 befürchten lässt, kann über eine Signaleinrichtung 31 ein optisches und/oder akustisches Warnsignal ausgegeben werden. Alternativ und/oder zusätzlich wird die Wanderdeckelanordnung 6 und/oder die Trommel 5 gestoppt. Gleichfalls kann vorgesehen sein, dass die Auswerteeinheit 29, die als Mikrocomputer ausgebildet sein kann, einen Stellbefehl an ein Stellmittel 32, beispielsweise einen Stellantrieb ausgibt, der den Flexibelbogen 12 neu einstellt, was wiederum Auswirkungen auf den Abstand δ der Spitzen 22, 26 hat (s. auch Figur 3).

Vorteilhafterweise ist der Kardierspalt δ von der Seite der Maschine her einsichtbar, damit ein Bediener auch optisch die Funkenerzeugung kontrollieren und evtl. zur manuellen Einstellung des Kardierspalts δ mittels der Flexibelbogen 12 nutzen kann.

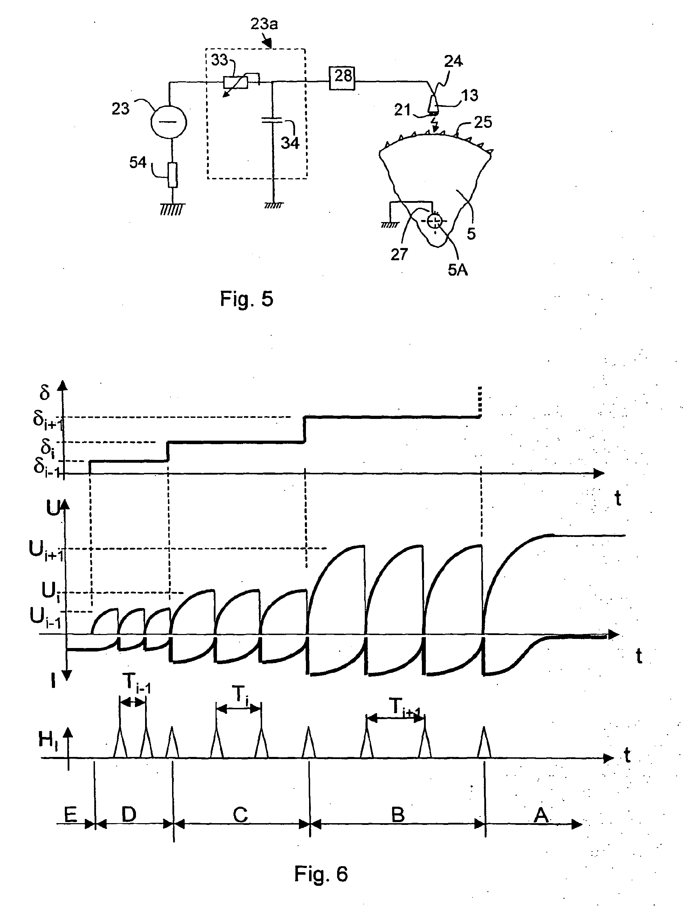

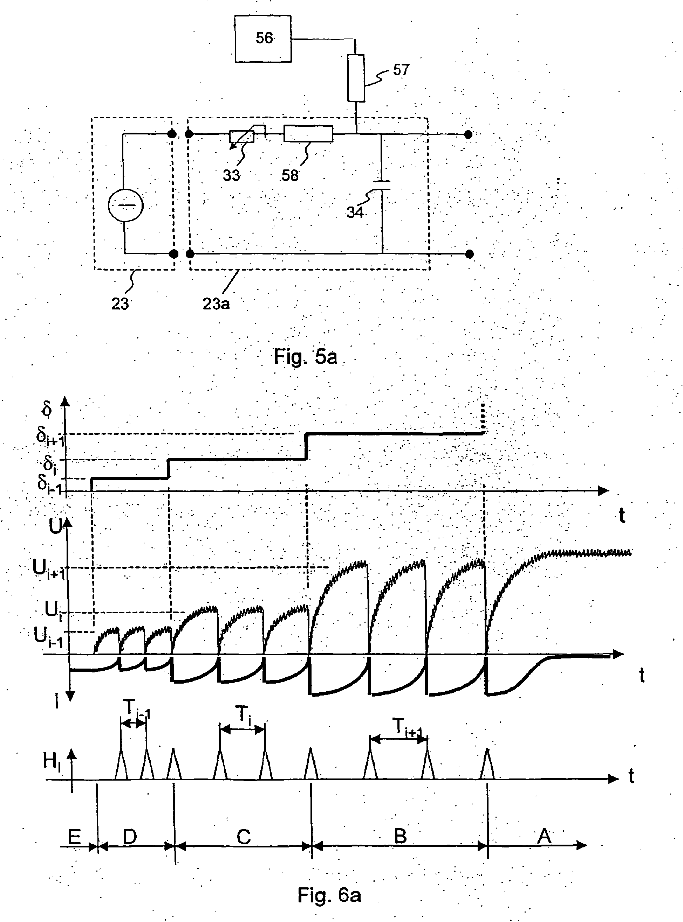

In der Figur 5 ist eine einfache Messanordnung zur Erzeugung der Funken und zum Messen des Zeitabstandes und/oder der Frequenz dargestellt. Eine Spannungsquelle 23 arbeitet mit einem Impulsgenerator 23a zusammen. Der Impulsgenerator kann unter anderem beispielsweise die Elemente Kondensator 34 und Widerstand 33 enthalten. Die Grösse des einstellbaren Widerstands bestimmt im Zusammenspiel mit dem Kondensator 34 die Aufladecharakteristik und damit die Kennlinie des Impulsgenerators. Die Kapazität des Kondensators 34 bestimmt unter anderem die Entladungsenergie. Der Impulsgenerator 23a ist über einen stationären Schleifkontakt 24 mit der Garnitur 21 verbunden. Ein ortsfester Schleifkontakt 27, der an der Antriebswelle 5a der nur ausschnittweise dargestellten Trommel 5 anliegt, ist auf Masse gelegt. Bei einer Funkenentladung zwischen den beiden Garnituren 21, 25 entlädt sich der Kondensator 34, wobei dieses Ereignis vom Messmittel 28 registriert wird.

In der Figur 6 ist der zeitliche Verlauf des Spannungsaufbaus resp. der Potentialdifferenz U zwischen den Spitzen 22, 26, der Verlauf der Stromaufnahme I (Messung 54 Figur 5) der Spannungsquelle sowie die Impulse der Funkenentladung H_{I} (Messung 28 Figur 5) dargestellt. Jede Funkenentladung führt zu einem abrupten Spannungsabfall auf Null und zu einem Anstieg des Stromflusses I, zugleich wird die Funkenentladung durch die Messung 28 registriert. Der Verlauf eines einzelnen Spannungsanstieges resp. dessen Charakteristik ist abgestimmt auf den zu messenden Kardierspalt δ und die Umfangsgeschwindigkeit der Trommel, sodass die Messung zwischen der Garnitur 21 eines Deckels 13 und der Garnitur 25 der Trommel 5 innerhalb einer so kurzen Zeit erfolgt, dass die Bewegung der Trommel keinen störenden Einfluss auf die Messung hat. Mit Hilfe des Impulsgenerators 23a wird dessen Kennlinie, resp. die Aufladecharakteristik unter Berücksichtigung der Drehzahl und des Umfangs der Trommel 5 so eingestellt, dass sich die Spitzen 26 der Trommel 5 zwischen zwei Funkenentladungen weniger als 0.5 mm, bevorzugt 0.03 mm, in Drehrichtung T vorwärts bewegen.

Figur 5a zeigt eine bevorzugte Ausführung der Impulserzeugung. Die in Figur 5 gezeigte Anordnung wird dadurch ergänzt, dass die durch den Impulsgenerator 23a erzeugten Impulse mit einem hochfrequenten Signal überlagert werden. Dieses wird durch einen Hochfrequenz (HF)-Oszillator 56 gebildet. Um eine Rückkopplung der Überlagerung zu vermeiden ist ein Hochpassfilter 57 zwischen dem Impulsgenerator 23a und dem HF-Oszillator 56 sowie ein Tiefpassfilter 58 im Impulsgenerator vorzusehen. Durch die Überlagerung wird eine kontrollierte Ionisierung der Luft in unmittelbarer Nähe der Garniturspitzen 22, 26 erreicht und damit eine hohe Reproduzierbarkeit der Funkenentstehung erreicht. Die Frequenz der Überlagerung (HF-Oszillator) entspricht zumindest der sechsfach, bevorzugterweise der zehnfachen Frequenz der Funkenentladungen.

Figur 6a zeigt das gleiche Diagram wie Figur 6 wobei der zeitliche Verlauf des Spannungsaufbaus bei einer Überlagerung des vom Impulsgenerator 23a erzeugten Impulse mit einer zusätzlichen hochfrequenten elektrischen Schwingung wie in Figur 5a beschrieben.

Im Bereich A treten keine Funkenentladungen auf. Es wird die Leerlaufspannung U₀ der Spannungsquelle erreicht ohne dass eine Funkenentladung provoziert wird. Der tatsächliche Abstand δ_{A} (Messabstand) der Garniturspitzen 22, 26 ist grösser als der maximal messbare Kardierspalt δ_{MAX}. Die Stromaufnahme der Spannungsquelle 23 ist auf Leerlaufniveau.

In den Bereichen B-D hingegen ist der Messabstand δ grösser 0 und kleiner δ_{MAX}, so dass Funkenentladungen bei einer Durchschlagspannung von Uᵢ auftreten, d.h. die Potentialdifferenz zwischen den Garniturspitzen 22, 26 ist so groß, dass eine Funkenentladung auftritt, ein momentaner Kurzschluss durch die ionisierte Luft entsteht und daher die Potentialdifferenz schnell auf Null sinkt, um anschließend entsprechend dem vorgegebenen Spannungsverlauf (Kennlinie) wieder anzusteigen. Die Frequenz der Funkenentladungen resp. die Dauer Tᵢ zwischen den Funkenentladungen wird registriert. Das Auswertegerät kann unter Berücksichtigung der vorgegebenen Aufladecharakteristik des Impulsgenerators und der Referenzmessung die Abstände δᵢ berechnen. Im Bereich B entspricht der gemessene Abstand δᵢ₊₁ dem grössten messbaren Abstand δ_{MAX} zwischen den Garnituren.

Im Bereich C ist der Messabstand δᵢ kleiner als δ_{B}, so dass die Frequenz grösser resp. die Zeitdauer Tᵢ kleiner ist als die Zeitdauer Tᵢ₊₁ im Bereich B. Im Bereich D ist der Messabstand δᵢ₋₁ wiederum kleiner als der Messabstand δᵢ im Bereich C. Der bevorzugte Einstellbereich für den Messabstand ist der Bereich D, da die Messung mit steigender Frequenz resp. abnehmender Zeitdauer an Genauigkeit gewinnt, weil die Frequenzzunahme überproportional zur Abnahme des Messabstandes ist.

Schliesslich ist im Bereich E die Situation eines Kurzschlusses dargestellt, bei der ein konstanter Kurzschlussstrom fliesst. Mit Hilfe der Stromaufnahmemessung 54 an der Spannungsquelle wird dieser Kurzschlussstrom gemessen und entsprechend einem vorgegebenen Schwellenwert eine Kollisionswarnung ausgegeben. Eine Signalisation einer Kollision ist mit der Frequenzmessung der Funkenentladungen nicht möglich, da wie in Figur 6 gezeigt in den Bereichen A und E keine Funkenentladungen registriert werden können, aber nur der Bereich E der Situation einer Kollision entspricht.

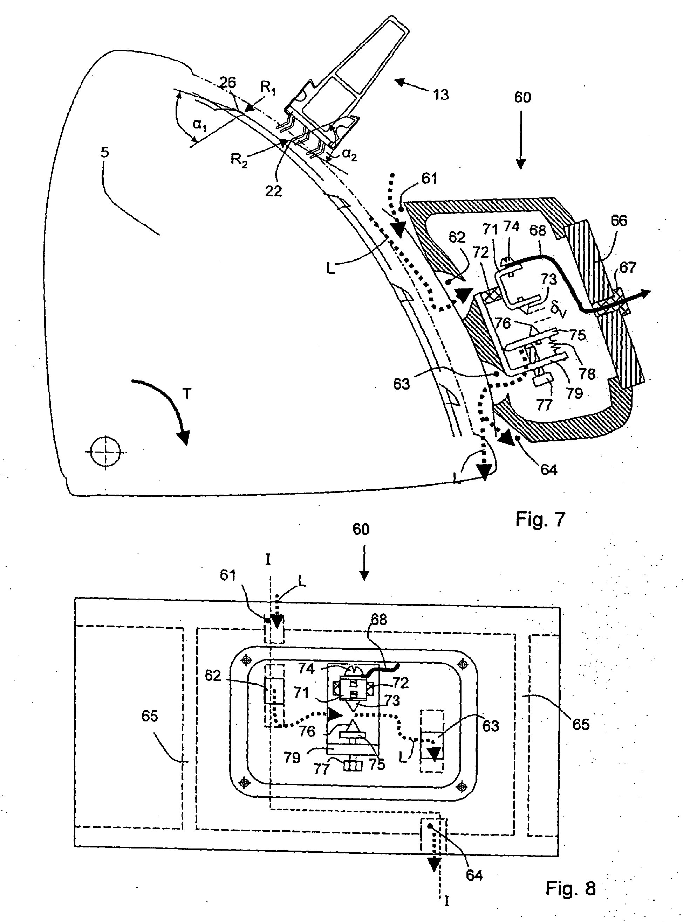

In den Figuren 7 und 8 ist eine Ausführungsform gezeigt, mit deren Hilfe Referenzmessungen vorgenommen werden können. Ein Referenzelektrodenpaar 71, 75 ist innerhalb eines Faserleitelements 60 montiert, das somit eine Doppelfunktion innehat. Das Faserleitelement 60 befindet sich zwischen der Wanderdeckelanordnung 6 und einem Kardierelement 10 (beide hier nicht dargestellt, s. aber Figur 1). Auf der Unterseite des Faserleitelements 60, der Mantelfläche der Trommel 5 gegenüber, ist ein sich in Trommeldrehrichtung T verengender Spalt 61 vorgesehen, um die von der Trommel 5 mitgerissene Luft L (gestrichelte gepunktete Linie) zu komprimieren. Daran schliesst sich in Strömungsrichtung der Luft L eine Öffnung 62 an, durch welche die Luft L in den Innenraum des Faserleitelements 60 eindringt. Die konkave Form und die Grösse dieser Öffnung 62 verhindern, dass Fasern in den Innenraum des Faserleitelements 60 eindringen können. Die weitgehend faserfreie Luft in dem Gehäuse des Faserleitelements 60 zirkuliert weiter durch eine stromabwärts gelegene Öffnung 63 an der Unterseite des Faserleitelements 60, wobei ein zusätzlicher dynamischer Unterdruck, der in der sich verbreiternden, nachfolgenden Spalte 64 entsteht, die Luftstrombewegung unterstützt. Die Öffnungen 62 und 63 können nacheinander in einer Linie oder versetzt (s. die Aufsicht gemäss der Figur 8) angeordnet sein.

In dem Innenraum des Faserleitelements 60 wird ein geschlossener Raum durch Wände 65 und die abnehmbare Abdeckung 66 (in Figur 7 aufgesetzt, in Figur 8 abgenommen) begrenzt. In diesem Raum befindet sich das Referenzelektrodenpaar, das einerseits eine fixe Elektrode 71, die auf einem Isolator 72 angeordnet ist und eine Elektrodenspitze 73 aus einer Platin-Legierung aufweist, und andererseits eine von Hand im Abstand zur fixen Elektrode 71 einstellbare Elektrode 75 mit einer Elektrodenspitze 76 aus ebenfalls einer Platin-Legierung umfasst. Die einstellbare Elektrode 75 ist schwenkbar an einem Schenkel 79 befestigt. Der genannte Abstand wird durch eine den Schenkel 79 durchsetzende Stellschraube 77 eingestellt, die auf die mittels einer Feder 78 beaufschlagte, schwenkbare Elektrode 75 wirkt. Die verstellbare Elektrode 75 wird z. B. elektrisch an der Masse und die fixe Elektrode 71 mittels einem an der fixen Elektrode 71 mit beispielsweise einer Schraube 74 befestigten und durch einen Isolator 67 in der Abdeckung 66 geführten Kabel 68 an eine Messeinheit 28 (s. Figur 4) angeschlossen.

Die Elektrodenspitzen 73 bzw. 76 besitzen die Hauptgeometriemerkmale der Spitzen 26 der Trommelgarnitur 25 (Radius R₁, Winkel α₁) bzw. der Spitzen 22 der Deckelgarnitur 21 (Radius R₂, Winkel α₂.). Diese geometrischen Eigenschaften haben einen direkten Einfluss auf den Corona-Effekt und ermöglichen damit vergleichbare Ergebnisse zwischen den Referenzentladungen zwischen den Elektroden 71, 75 einerseits und den Messentladungen zwischen den Spitzen der Deckelgarnitur 21 und der Trommelgarnitur 25 andererseits. Durch das Einstellen des Abstandes zwischen den Elektroden 71 und 75 auf einem Wert δᵥ (=δ_{Vergleich}), der ähnlich gross wie der zu erwartende Garniturabstand δ ist, werden die Voraussetzungen geschaffen, Einflüsse der Oberflächengeometrien der Garnituren 21, 25 sowie der Mikrobetriebsklimafaktoren auf die Messentladungen zu eliminieren. Hierzu wird der bekannte Abstand zwischen den Referenzelektroden 71, 75 und die vergleichbare Oberflächengeometrie der Referenzelektroden 71, 75 herangezogen. Unter dem Begriff "Mikrobetriebsklima" sind insbesondere die Lufttemperatur, die Luftfeuchtigkeit, die Luftgeschwindigkeit, die Anwesenheit von ionisierenden Partikeln und/oder Restionisationen zu verstehen. Unter Garniturgeometrien sind insbesondere die Werte der Spitzenwinkel der Garnituren 21, 25 und die Werte der Spitzenradien zu verstehen.

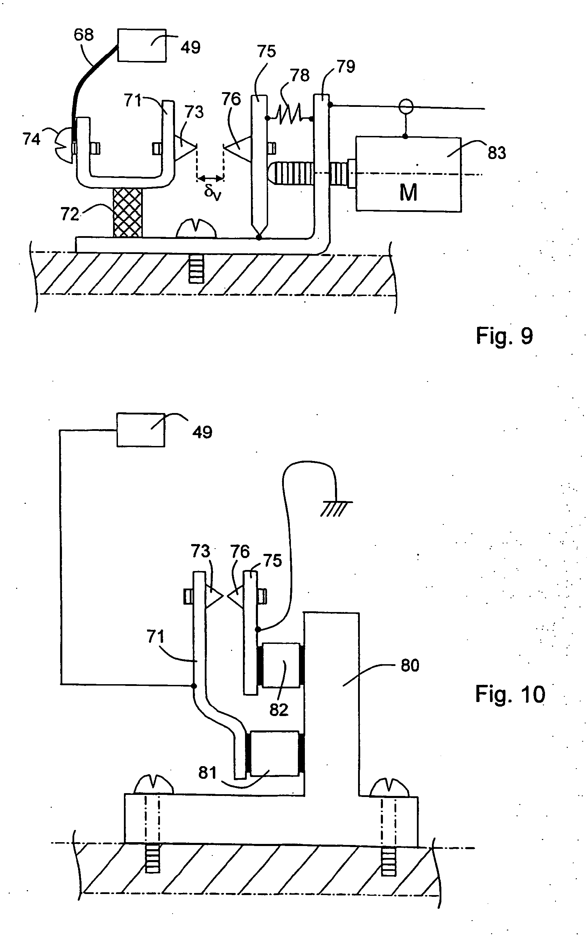

In der Figur 9 ist ein Beispiel für eine elektromechanische Lösung zur Einstellung des Abstandes des Referenzelektrodenpaares 71, 75 wiedergegeben. Bei sonst gleichen Bauelementen (mit gleichen Bezugszeichen) wie bei der Ausführungsform gemäss der Figuren 7 und 8 wirkt ein Elektromotor 83 auf die Elektrode 75. Damit kann der Abstand δ_{V} auch während des Kardenbetriebs an einen neuen Garnituren-Sollabstand angepasst werden, indem der Motor 83 durch eine nicht dargestellte Steuerung angesteuert wird.

In der Figur 10 wird der Abstand der Referenzelektroden 71, 75 mittels piezoelektrischer Bauelemente eingestellt. Auf der elektrisch nicht leitenden Unterstützungsplatte 80 sind zwei piezoelektrische, gleich grosse Aktoren 81 und 82 angeordnet. An diesen sind die beiden Elektroden 71 bzw. 75 angeschlossen, die vorliegend beide beweglich ausgebildet sind. Durch diese Anordnung wird die thermische Ausdehnung der beiden Aktoren 81, 82 kompensiert. Werden die Piezo-Aktoren 81, 82 mit derselben Steuerspannung in einer Parallelschaltung mit einer umgekehrten Polung beaufschlagt, kann der Abstand δᵥ zwischen den beiden Elektroden 71, 75 auch während der Produktion an einen neuen Garnituren-Sollabstand angepasst werden.

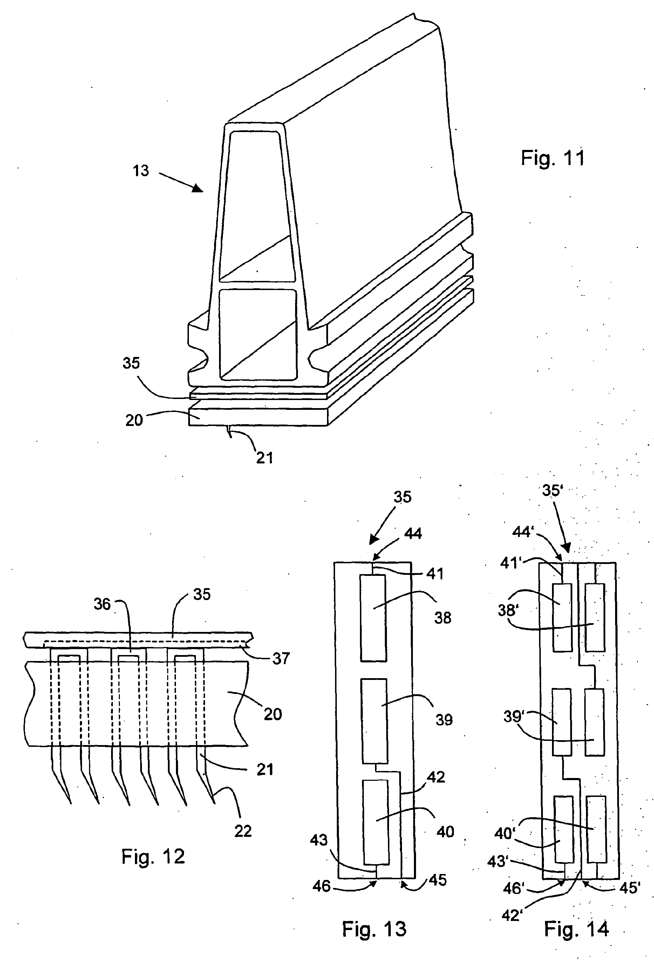

In der Figur 11 ist eine weitere Ausführungsform der Erfindung dargestellt, um die Funkenentladung zu messen. Hierbei dient nicht der Deckelstab 13 als Leiter, sondern ein, zwischen Deckelstab 13 und Garniturstreifen 20, angeordnetes Flächenelement 30, das an seiner Unterseite zumindest abschnittsweise elektrisch leitend ausgebildet ist, jedoch an der Oberseite keinen elektrischen Kontakt mit dem Deckelstab 13 hat. In der Figur 11 sind Deckelstab 13, Flächenelement 30 und Garniturstreifen 20 in Explosionsdarstellung gezeigt. Bei Einsatz in der Maschine liegen diese Elemente aneinander an und werden mittels Klammern 16 (siehe Figur 2) zusammengehalten.

In der Figur 12 ist ein Abschnitt eines Garniturstreifens 20 von der Seite dargestellt, durch den die Garniturnadeln der Garnitur 21 von oben hindurchgeschoben sind. Der Garniturstreifen 20 besteht üblicherweise aus einem Textil- oder Ledermaterial. Die rückwärtigen Schenkel 36 der Garniturnadeln 21 liegen an elektrisch leitfähigen Abschnitten, den hier als solche bezeichneten Leitzonen 37 an, so dass Strom von den Spitzen 22 der Garnitur 21 zu den Leitzonen 37 fliessen kann. Die Leitzonen 37 sind hierbei in das Flächenelement 35 eingelassen, aufgedruckt, aufgeklebt oder auf sonstige Weise am Flächenelement 35 vorgesehen.

In den Figuren 13 und 14 sind zwei verschiedene Ausführungsformen von Flächenelementen 35 und 35' von der Unterseite her dargestellt. Die Ausführungsform der Figur 13 weist drei Leitzonen 38, 39, 40 auf, die elektrisch isoliert voneinander in Längsrichtung des Flächenelements 35 angeordnet sind. Diese Leitzonen 38, 39, 40 sind über Signalleitungen 41, 42, 43 mit Kontakten 44, 45, 46 an den Stirnseiten des Flächenelements 35 verbunden, zu denen ortsfeste, gegenüberliegende Schleifkontakte korrespondieren. Jeder dieser Kontakte 44, 45, 46 ist mit dem Messmittel zur Zählung der Funkenentladungen 28 (s. Figur 4) verbunden, um ortsaufgelöst die Funkenentladungen im Bereich der jeweiligen Leitzonen 38, 39, 40 zu erfassen. Hierdurch lassen sich beispielsweise Aussagen über den Zustand der Spitzen in den, den verschiedenen Leitzonen zugeordneten Kardierzonen treffen.

Die Ausführungsform gemäss der Figur 14 bietet zudem die Möglichkeit einer ortsaufgelösten Messung über die Breite des Flächenelements 35' und damit des Garniturstreifens 20. Hierbei sind sechs Leitzonen vorgesehen, wobei jeweils zwei Leitzonen 38' bzw. 39' bzw. 40' in Bewegungsrichtung des Deckelstabs 13 nebeneinander liegen. Diese paarweise angeordneten Leitzonen 38', 39' bzw. 40' sind - wie bei der Ausführungsform gemäss der Figur 13 - über die Länge des Flächenelements 35' verteilt. Diese Anordnung ermöglicht es, die Funkenentladungen in sechs verschiedenen Bereichen ortsaufgelöst zu erfassen. Die Anordnung der Leitungen 41', 42', 43' sowie der Kontakte 44', 45', 46' an den Stirnseiten des Flächenelements 35' entsprechen denjenigen der Figur 13. Durch die Anordnung gemäss der Figur 14 ist gegebenenfalls auch eine Beurteilung des Zustandes des Flexibelbogens 12 (s. Figuren 1, 3, 17) möglich.

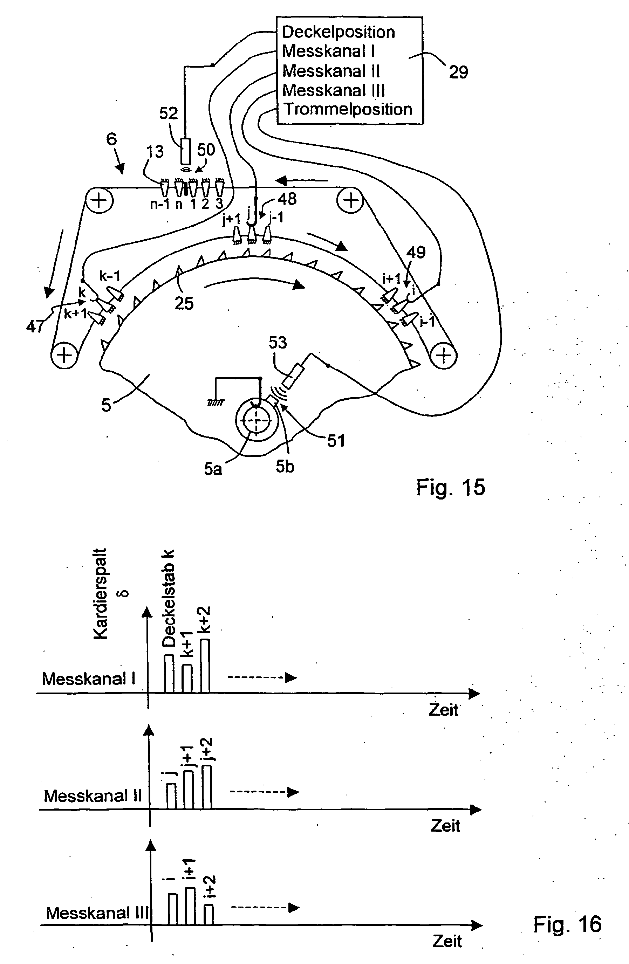

In der Figur 15 ist eine Ausführungsform der Erfindung dargestellt, um individuelle Abstandsmessungen zwischen einzelnen Deckelgarnituren 21 und der Trommelgarnitur 25 zu realisieren. Hierzu sind gemäss Figur 15 drei ortsfeste Messstellen zum Messen der Funkenentladungen vorgesehen, die über den Flexibelbogen 12 (s. Figur 1) verteilt sind und an denen jeweils ein Schleifkontakt 47, 48, 49 mit dem jeweiligen gerade vorbeitransportierten Deckelstab 13 besteht. Jeder Schleifkontakt erfasst hierbei nur einen Deckelstab 13. Jeweils aufeinander folgende Deckelstäbe 13 sind im Bereich des Schleifkontakts 49 mit i-1, i, i+1, im Bereich des Schleifkontakts 48 mit j-1, j, j+1 und im Bereich des Schleifkontakts 47 mit k-1, k, k+1 bezeichnet. Die Schleifkontakte 47, 48, 49 der drei Messstellen sind über Verbindungsleitungen an voneinander unabhängige Messkanäle angeschlossen, die hier mit römischen Ziffern I, II und III bezeichnet und Teil einer Mess- und Auswerteeinheit 29 sind. Alternativ ist lediglich ein Messkanal vorhanden, der kommutierend die Signale von den Schleifkontakten 47, 48, 49 verarbeitet. Die Schleifkontakte 47, 48, 49 sind - wie anhand der Figuren 4 und 5 schon erläutert - an einen hier nicht näher dargestellten Impulsgenerator angeschlossen.

Die Ausführung gemäss der Figur 15 weist zudem zwei weitere Messstellen 50, 51 auf. Zum einen ist dies eine berührungslose Erfassung (z.B. induktiv, optisch, mit Ultraschall etc.) an der Oberseite der Wanderdeckelanordnung 6 (Messstelle 50), mit der ein mit "1" gekennzeichneter Deckelstab 13 aus der Gesamtzahl n der Deckelstäbe mittels eines Sensor 52 erfasst wird, der eine Zuordnung der gemessenen Abstände zu den betreffenden Deckelstäben i, j, k erlaubt. Die weitere Messstelle 51 mit einem berührungslos messenden Sensor 53 ist im Bereich der Drehachse der Trommel 5 vorgesehen und meldet die momentane Winkelposition der Trommel 5 anhand einer auf die Achse 5a aufgesetzten Nocke 5b, um die geometrischen Ungenauigkeiten der Trommelaussenfläche (wie z.B. Rundheitsfehler) aus den mittels der Messkanäle I, II und III ermittelten Abstandsmessungen herauszurechnen.

An jeder der drei Schleifkontakten 47, 48, 49 kann der Abstand δ der jeweiligen Deckelgarnitur 21 jedes Deckelstabs 13 von der Trommelgarnitur 25 mit Hilfe der Frequenzmesswerte (siehe Figur 6) ermittelt werden. In der Figur 16 sind diese ermittelten Werte genauer dargestellt, wobei auf der y-Achse für jeden Deckelstab k, k+1, k+2, ... bzw. j, j+1, j+2, ... bzw. i, i+1, i+2, ... der gemessene Kardierspalt δ als Funktion der Zeit für die drei Messkanäle I, II und III aufgetragen ist.

Mit Hilfe der Ausführungsform der Figur 15 und anhand der in Figur 16 dargestellten Ergebnisse können gleichfalls der Abnutzungsgrad jeder einzelnen Deckelgarnitur 21 oder eventuelle Schäden an diesen ermittelt werden. Ebenfalls kann auf diese Weise der Anzugswinkel bzw. Neigungswinkel Θ der Deckelgarnitur 21 gegenüber der Trommel 5 (siehe Figur 2) gemessen werden.

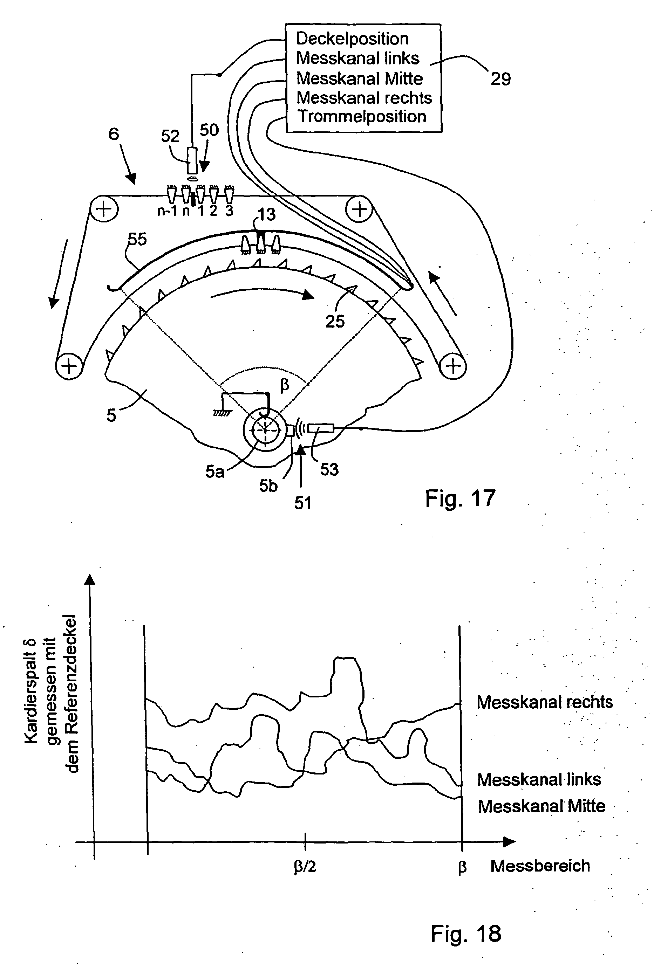

In der Figur 17 ist eine weitere Ausführungsform dargestellt, wobei hier über nahezu den gesamten Kardierbereich, d.h. hier über einen Messbereich mit einem Winkel β, der Verlauf des Kardierspalts δ mit Hilfe der Messungen der Zeitabstände und/oder Frequenzen gemessen wird. Mindestens ein langer Schleifkontakt 55 spannt sich über diesen Messbereich β, der entlang diesem mit der Oberseite eines speziell präparierten Referenz-Deckelstabs 13 in elektrischen Kontakt kommt. Es kann somit der Kardierspalt δ über die gesamte Laufbahn dieses Deckelstabs 13 gemessen werden.

Bevorzugt ist eine Ortsauflösung der Kardierspaltmessung über die Breite dieses Deckelstabs 13, d.h. quer zu seiner Umlaufrichtung, vorgesehen. Hierzu ist beispielsweise an der linken und der rechten Seite des Deckelstabs 13 sowie in seiner Mitte ein jeweiliger Schleifkontakt vorgesehen, wobei hierzu beispielsweise ein Flächenelement 35 mit drei über die Breite verteilten Leitzonen 38, 39, 40 entsprechend der Figur 13 vorgesehen sein kann. Die Kontaktierung dieser Leitzonen kann beispielsweise über drei nebeneinander verlaufende Schleifkontakte realisiert werden, wobei in der Figur 17 lediglich ein derartiger Schleifkontakt 55 dargestellt ist; entsprechend sind in der Figur 17 allerdings drei Verbindungsleitungen gezeigt, die zu einem "Messkanal links", einem "Messkanal Mitte" bzw. einem "Messkanal rechts" führen. Auch hier kann alternativ ein kommutierender Messkanal vorgesehen sein. Die Messstellen 50 und 51 mit ihren Sensoren 52 bzw. 53 entsprechen denjenigen der Figur 15.

In der Figur 18 ist beispielhaft die Grösse des Kardierspalts δ über den Messbereich β für die drei Messkanäle aufgetragen. Diese hypothetischen Kurven würden einem Benutzer der Karde Hinweise darauf geben, in welchen Teilbereichen des Messbereichs β der Kardierspalt δ nachgestellt werden sollte, insbesondere durch Auswechseln von Deckelstäben 13 und/oder durch Nachjustierung des Flexibelbogens 12 (s. Figuren 1 und 3).

Analog zu der Ausführungsform gemäss der Figur 15 ist auch bei der in Figur 17 gezeigten Ausführungsform eine berührungslose Messung der Position eines bestimmten Deckelstabs (gekennzeichnet "1") vorgesehen. Ebenso werden Unrundheiten der Trommel 5 mittels einer berührungslosen Messung an der Trommelwelle 5a erfasst.

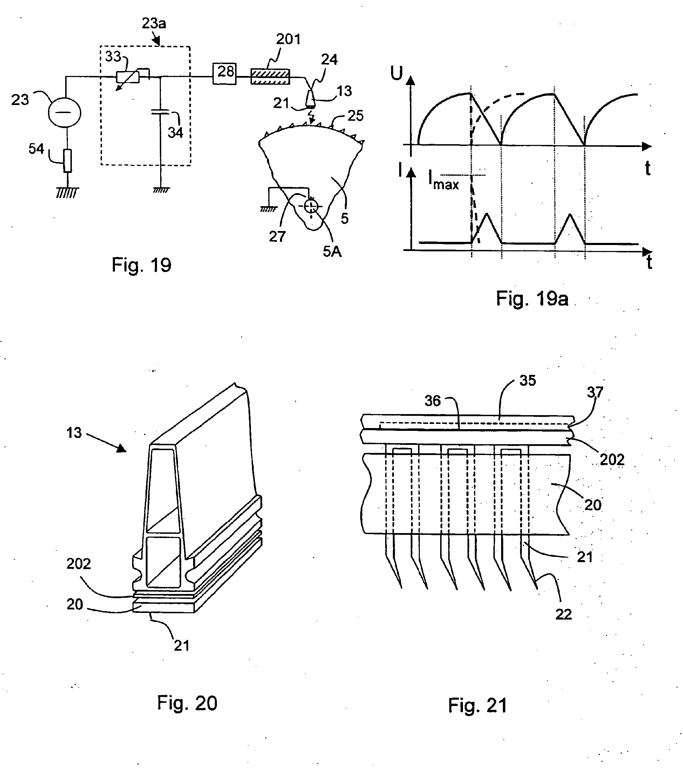

In den Figuren 19 ist ein Schaltbild einer Messanordnung nach Figur 5 mit dem Einbau eines einfachen oder verteilten elektrischen Widerstandes gezeigt. Im Falle der Figur 19 ist der Widerstand als Entstörwiderstandskabels 201 ausgeführt. Das Verbindungskabel zwischen dem Impulsgenerator 23a und dem zu messenden Bauteil, in diesem Falle ein Deckel 24, wird als Entstörwiderstandskabel 201 ausgeführt. Derartige Kabel sind bekannt aus der Automobilindustrie und werden zur Entstörung der Zündanlagen bei Verbrennungsmotoren eingesetzt. Das verwendete Kabel 201 hat einen Widerstand von 0.1 KΩ bis 5 MΩ, vorzugsweise 1 bis 5 kΩ. Wie in Figur 19a gezeigt wird durch den Widerstand 201 eine Begrenzung des maximalen Entladungsstroms erreicht ohne dass dabei die Zündspannung vermindert wird. Diese Anordnung verbessert die elektromagnetische Verträglichkeit bei einer vernachlässigbaren Störkapazität des zu messenden Bauteils.

Ist die Störkapazität jedoch grösser und nicht vernachlässigbar, wie dies bei Deckel-Trommel-Systemen mit Arbeitsbreiten grösser als 1300 mm der Fall ist, ist der Einbau eines einfachen Entstörwiderstandskabel 201 ungenügend. Die Störkapazität berechnet sich aus den sich gegenüberliegenden Flächen der zu messenden Bauteile, im Falle eines Deckel-Trommel-Systems aus der auf die Trommeloberfläche projizierten Fläche des Deckels. Dabei erreicht die Störkapazität bei einer Trommelbreite von 1500 mm und einer Deckelbreite von 22 mm den Wert von 750 pF bis 1 nF. Die im Deckel 13 gespeicherte elektrische Ladung wird während einer Entladung unabhängig vom Entstörwiderstand 201 an den Garniturspitzen 21 übergeben. Um nun auch bei grossen Störkapazitäten eine Begrenzung des Entladestroms zu erreichen ist eine Widerstandsmatte 202 vorzusehen. Die Widerstandsmatte 202 wird wie in Figur 20 gezeigt zwischen den Deckel 13 und die Garnitur 21 eingefügt. Um wirksam zu werden sollte die Widerstandsmatte 202 einen Durchgangswiderstand von 1 bis 1500 kΩm aufweisen, bevorzugterweise 15 bis 75 kΩm. Die genaue Auslegung des Widerstandes ist abhängig von der tatsächlich vorhandenen Störkapazität des Systems. Die Widerstandsmatte ist bevorzugterweise aus einem elektrisch leitenden Kunststoff ausgeführt.

In einer weiteren bevorzugten Ausführung ist der Garniturstreifen 20 beziehungsweise die Fundation der Deckelgarnitur 21 selbst als Entstörwiderstand ausgeführt, beispielsweise durch in die Fundation eingebaute elektrisch leitende Bestandteile in Form von Drähten oder Partikeln. Dadurch kann auf den Einbau einer separaten Widerstandsmatte 202 verzichtet werden.

Figur 21 zeigt eine vergrösserte Seitenansicht eines Garniturstreifens 20 mit eingesteckten Garniturnadeln 21 in einer Anwendung nach Figur 12. Dabei ist der Einbau einer Widerstandsmatte 202 zwischen Deckelstab 13 und Garniturstreifen 20 bei Verwendung von Flächenelementen 37, 38, 39, 40 nach Figur 12 bis 14 gezeigt. Um eine Widerstandsmatte 202 zur Entstörung einsetzen zu können, muss diese in der Verbindung zwischen den Spitzen 21 und dem Impulsgenerator 23a angeordnet sein, wobei der Einbauort so nahe als möglich an der Stelle der Funkenentladung liegen muss.

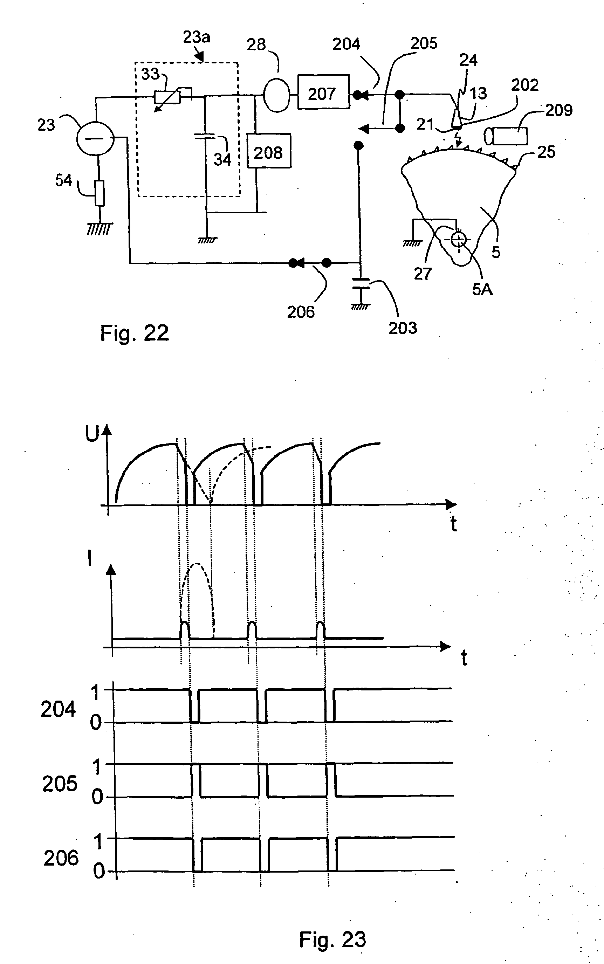

Figur 22 zeigt ein Schaltbild einer Messanordnung nach Figur 5 mit Einbau der notwendigen Elemente zur Durchführung einer unterbrochenen Funkenentladung. Dabei wird zwischen den Impulsgenerator 23a und das zu messende Bauteil, in diesem Fall ein Deckel 13 ein erstes Kommutationselement 204 eingesetzt. Dieses ermöglicht über ein zweites Kommutationselement 205 die Schaltung einer Verbindung des Deckels 13 mit einem energierekuperativen Kondensator 203. Dieser Kondensator wird wiederum mit der Energie- oder Spannungsquelle 23 über ein drittes Kommutationselement 206 verbunden. Die dabei verwendeten Kommutationselemente 204, 205, 206 können zum Beispiel als Halbleiterelemente wie Thyristoren, Triak, Transistor oder andere für schnelle Schaltungen geeignete elektronische Elemente gebaut werden. Auch bei dieser Messanordnung kann zur Entstörung und Verbesserung der elektromagnetischen Verträglichkeit eine Widerstandsmatte 202 im Deckel 13 vorgesehen werden.

In Figur 23 sind die Schaltungsabfolge der Kommutationselemente 204, 205, 206 und deren Auswirkungen auf den Spannungs- und Stromverlauf gezeigt. Die steigende Spannung führt in einer bestimmten Höhe zu einer Funkenentladung, was den Stromfluss ansteigen lässt. Mit einer gestrichelten Linie ist der normale Verlauf einer Entladung dargestellt (wie bereits in Figur 6 erläutert). Mit einer Spannungsmessung 208 kann die fallende Flanke des Spannungssignals detektiert werden und damit das Kommutationselement 204 und 205 geschaltet werden. Die Schaltung der Kommutationselemente 204 und205 kann auch durch die steigende Flanke des Stromsignals einer Strommessung 207 erfolgen. Ebenfalls ist anstelle der Strom- 207 oder Spannungsmessung 208 der Einsatz einer Ultraviolett-Fotodiode 209 möglich. Eine solche Fotodiode 209 erkennt eine beginnende Funkenentladung an den bei einer Entladung auftretenden optischen Effekten. Durch die Trennung des Deckels 13 von der Spannungsversorgung 23 und die Verbindung des Deckels 13 mit dem Kondensator 203 wird die Energie vom Deckel 13 in den Kondensator 203 abgeleitet und die Spannung an der Entladungsstelle fällt gegen Null. Damit wird auch der Stromfluss unterbrochen und der Stromverbrauch sinkt erheblich, wie dem Strom-Zeit-Diagramm in Figur 23 zu entnehmen ist. Durch die nachfolgende Schaltung des dritten Kommutationselementes 206 und damit durch die Schaffung einer Verbindung zwischen dem Kondensator 203 und der Spannungsversorgung 23 wird die im Kondensator 203 gespeicherte Energie zurückgeführt. Die Kommutationselemente 204, 205, 206 werden wieder zurückgestellt und der nächste Spannungsaufbau bis zur erneuten Entladung kann beginnen.

Anstelle eines energierekuperativen Kondensators 203 ist auch der Einbau eines einfachen elektrischen Last-Widerstandes möglich. Ein solcher Widerstand ist direkt zu erden und eine Verbindung mit der Spannungsquelle 23 und somit auch das dritte Kommutationselement 206 entfällt. Die Bestimmung des Schaltpunktes wie auch die Schaltung der beiden verbleibenden Kommutationselemente bleibt gleich. Es ergibt sich einzig der Unterschied, dass die Energie nicht in die Spannungsquelle 23 zurückgeführt, sondern einfach über den Last-Widerstand abgeleitet wird und damit verloren geht.

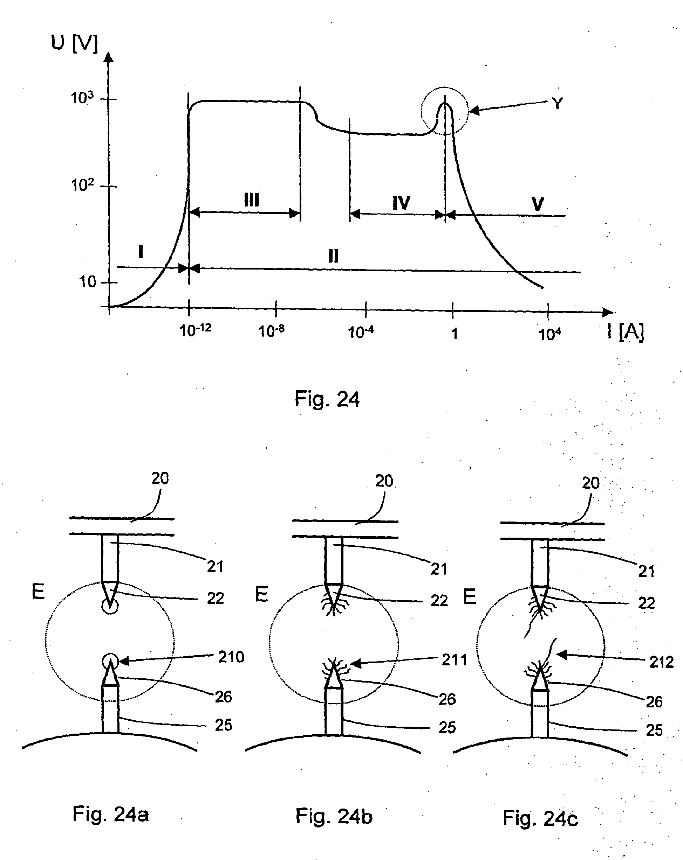

Figur 24 zeigt eine vereinfachte logarithmische Darstellung einer U,I - Gasentladungskennlinie. Die Kennlinie zeigt einen für Gasentladungen typischen Verlauf. In einem ersten Teil, dem eigentlichen Spannungsanstieg spricht man von unselbständiger Entladung (I). Es erfolgt keine Entladung ohne dass am System etwas geändert wird. Es könnte zum Beispiel eine Entladung in diesem Bereich provoziert werden durch das verändern des Abstandes zwischen den Bauteilen. Die sogenannte selbständige Entladung (II) würde dann auf einem tieferen Spannungsniveau ablaufen, am Ablauf selbst würde sich allerdings nichts ändern. Als erste selbständige Entladung (II) folgt die Townsend-Entladung (III), währenddessen der Stromfluss ständig zunimmt. Nach einer geringfügigen Spannungsabsenkung folgt die sogenannte sichtbare Entladung (IV) bei welcher das für Gasentladungen typische Leuchten auftritt. Am Ende der sichtbaren Entladung (IV) erfolgt ein kurzer steiler Spannungsanstieg (Y) und die sogenannte Vollentladung (V). Während der Vollentladung (V) "springt" ein Funke über und die Spannung respektive Potentialdifferenz sinkt rasch ab. Der Verlauf von Gasentladungen ist immer etwa gleich und endet bei stetiger Spannungsversorgung in einem Funkenschlag zwischen den Bauteilen, weshalb man bei dieser Art der Entladung auch von Funkenentladung spricht.

Die sichtbare Entladung (IV) kann nun weiter unterteilt werden in eine Glimmentladung, eine nachfolgende Streamer-Entladung und die anschliessende Leader-Entladung. In Figur 24a ist eine Glimmentladung, in einer Funkstrecke mit einer "Spitze-Spitze" - Anordnung, dargestellt. Durch die steigende Spannung wird im lokalen Einsatzfeld E der Zündwert für eine Korona-Entladung erreicht und die Glimmentladung 210 findet statt. Durch einen unverminderten Spannungsanstieg wird die Glimmentladung 210 in eine Streamer-Entladung 211 wachsen. Die Entladung wird intensiver. Eine Streamer-Entladung 211 ist in Figur 24b dargestellt. Bei einem weiteren Spannungsanstieg entstehen die Leader-Entladungen 212 wie sie in Figur 24c dargestellt sind. Die Leader-Entladungen 212 bestehen aus kurzen "Blitzen" an den beiden äussersten Enden 22, 26 der Spitzen 21, 25 der zu messenden Bauteile. Der weitere Spannungsanstieg führt nun dazu, dass die Leader-Entladungen 212 stetig wachsen und schlussendlich beim Erreichen einer Feldstärke von ca. 3 kV/mm im Einsatzfeld zu einem überspringenden Funken und somit einer Vollentladung führen. Die sichtbare Entladung (IV) kann auch als Vorentladung bezeichnet werden.

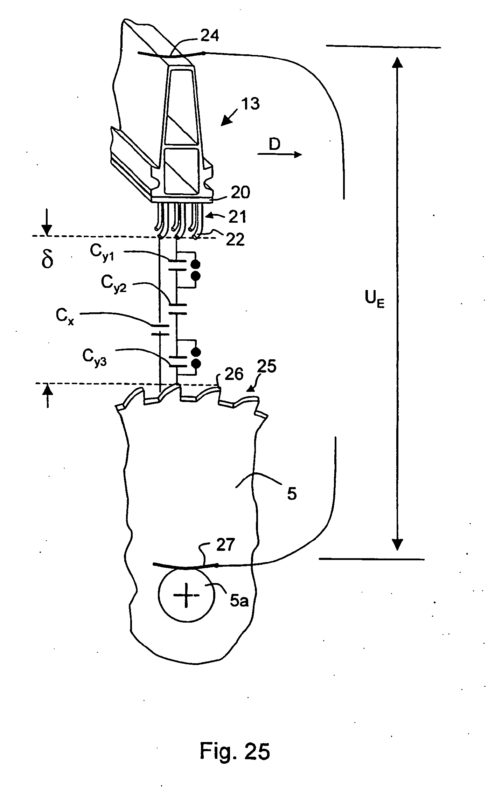

Figur 25 zeigt eine schematische Darstellung als äquivalenter elektrischer Schaltkreis des Einsatzfeldes E zur Erklärung der Vorentladung. Dabei können die zu messenden Bauteile 22, 26 als Elemente eines Kondensators C_{X} betrachtet werden. Die Potentialdifferenz respektive Spannung über die Entladungsstrecke U_{E} wird stetig gesteigert und dabei der Kondensator C_{X} soweit aufgeladen, bis bei einer Vollentladung die Energie abfliesst und die Potentialdifferenz ausgeglichen wird. Um nun die Vorentladung zu verstehen ist das Einsatzfeld E respektive der Abstand δ zwischen den zu messenden Bauteilen 22, 26 in mindestens drei Kondensatoren C_{Y1} bis C_{Y3}, wo 1/ C_{X} = 1/ C_{Y1} + 1/C_{Y2} +1/ C_{Y3}, zu unterteilen. Bei einer beginnenden Vorentladung werden nun die beiden äusseren Kondensatoren C_{Y1} und C_{Y3} entladen, wobei die Ladung von C_{Y2} nur langsam steigt. Die Entladungen von C_{Y1} und C_{Y3} folgen in immer kürzeren Abständen. Die Intensität der Entladungen von C_{Y1} und C_{Y3} nimmt mit steigender Spannung U_{E} stetig zu (siehe auch Entwicklung von Glimm- bis Leader-Entladungen in Figur 24a bis 24c), bis auch C_{Y2} genügend Ladung hat und sich die Kondensatoren C_{Y1} bis C_{Y3} (entspricht C_{X}) gleichzeitig in einer Vollentladung entladen. Jede Entladung von C_{Y1} oder C_{Y3} führt dabei zur Erzeugung von Stoss-Strömen. Die Abstände zwischen den einzelnen Stoss-Strömen werden mit fortschreitender Entladung immer kürzer. Diese Stoss-Ströme können messtechnisch erfasst werden, um eine bevorstehende Vollentladung zu erkennen und zu verhindern. Für die Messung dieser Stoss-Ströme kann auf bekannte Systeme zurückgegriffen werden, wie zum Beispiel die PRPDA-Methode (Phase Resolved Partial Discharge Analysis) oder die Ermittlung der Verschiebung zwischen Scheinstrom und Wirkstrom im Einsatzfeld (TE-Knick). Der Istwert und das Frequenzspektrum dieser Stoss-Ströme ist vom Einsatzfeld E und damit vom Kardierspalt abhängig. Es ist jedoch auch eine Abhängigkeit von der Polarität des Stromes und der Geometrie der Spitzen 22, 26 der zu messenden Bauteile 5, 25 gegeben.

Eine weitere Möglichkeit zur Erfassung einer bevorstehenden Vollentladung ist eine Messung der elektrischen Parameter der Einspeisung in das zu messende Bauteil. Einerseits kann wie aus der Kennlinie in Figur 24 ersichtlich. Über den abrupten Spannungsanstieg im Bereich Y, also unmittelbar vor der Vollentladung, ermöglicht die Feststellung des Zeitpunkts. Die gleiche Feststellung kann durch eine Messung der Vorentladungsströme erhalten werden.

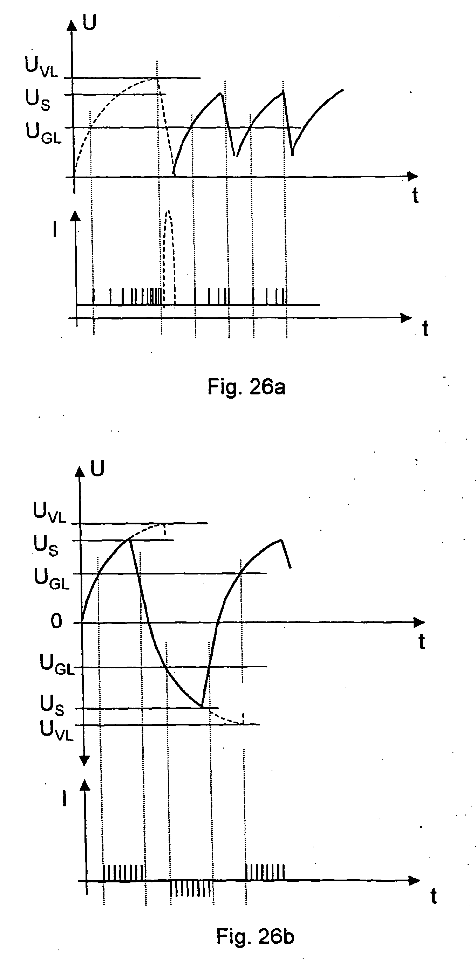

In den Figuren 26a und 26b findet sich eine schematische Darstellung des Strom- und Spannungsverlaufs einer Vorentladung mit vorangehender Vollentladung (nur Figur 26a). Aufgrund der erfassten Vorentladung wird eine Steuerspannung US festgelegt, welche nicht überschritten wird. Somit wird eine Vollentladung vermieden und die Vorentladungen folgen sich in einem bestimmten Abstand, welcher wiederum eine Bestimmung des Abstandes zwischen den zu messenden Bauteilen ermöglicht. In beiden Darstellungen der Figur 26a und 26b sind die bei einer Steigerung der Spannung bis zur Zündspannung U_{VL} der Vollentladung entstehenden Spannungs- und Stromverläufe mit gestrichelten Linien angegeben. Mit Erreichen des Zündwertes für die Glimmentladungen U_{GL} entstehen die Stoss-Ströme. Bei Erreichen der Steuerspannung wird die Versorgungsspannung abgesenkt und somit die Vorentladung unterbrochen. Sobald die Spannung unter den Wert für die Selbstzündung (Glimmentladung)U_{GL} fällt, hören die Stoss-Ströme auf zu fliessen und mit einem nächsten Spannungsaufbau kann begonnen werden.

Die in Figur 26a als Vollentladung gezeigte erste Entladung dient der Aktualisierung der Randbedingungen der Vorentladungen. In der Darstellung des Stromverlaufs in Figur 26a ist ersichtlich, dass die bei einer beginnenden Glimmentladung entstehenden Stoss-Ströme mit steigender Spannung in immer kürzeren Abständen auftreten. Werden nun eine oder mehrere Entladungen bis zur Vollentladung geführt kann die Abfolge dieser Stoss-Ströme bestimmt werden. Anhand deren Auftreten und Abfolge wird eine Steuerspannung U_{S} bestimmt mit Hilfe derer die nachfolgenden Entladungen unterbrochen und damit nur als Vorentladungen ausgeführt werden. Damit kann der Nachteil der Abhängigkeit von den mikrogeometrischen Verhältnissen umgangen werden und der Zustand der Spitzen der Garnitur ermittelt werden. Eine Messung besteht nun vorteilhafterweise aus einem oder mehreren Zügen von Voll- und Vorentladungen, wobei ein einzelner Zug aus zu Beginn durchgeführten Vollentladungen und nachfolgenden Vorentladungen besteht. Die Häufigkeit von Vollentladungen zur durchgeführten Gesamtzahl an Entladungen kann dabei vorteilhafterweise in einem Verhältnis von 1 zu 10 bis 1 zu 25 respektive 10 bis 4 Vollentladungen bei 100 Entladungen insgesamt variieren. Jedes andere Verhältnis ist ebenfalls möglich (bis zur Durchführung von reinen Vollentladungen oder reinen Vorentladungen), wobei die entsprechenden Nachteile in Kauf zu nehmen sind.

Um den Einfluss der Polarität des Stromes auf Grösse und Frequenzspektrum der Stoss-Ströme auszuschalten können die Vorentladungen mit einer pulsierenden Wechselspannung ausgelöst werden. Ein entsprechendes Diagramm mit dem Strom-und Spannungsverlauf zeigt Figur 26b.

Die vorliegende Erfindung ist nicht auf die dargestellten und beschriebenen Ausführungsbeispiele beschränkt. So wurde anhand der Figuren die Abstandsmessung zwischen den Garniturspitzen 22, 26 von Deckelgarnitur 21 und Sägezahngarnitur 25 einer Kardentrommel 5 beschrieben. Ohne Einschränkungen ist das beschriebene Messprinzip auch zur Abstandsmessung zwischen den Sägezahngarnituren der Trommel 5 und einem Briseur (siehe Figur 1) übertragbar. Gleichfalls sind andere Möglichkeiten zur elektrischen Kontaktbildung möglich. Statt Schleifkontakten können gleichfalls andere elektrisch leitende Übertragungsmittel eingesetzt werden.

Wenn im Vorstehenden der Begriff Funkenentladung verwendet wurde, sind damit auch Spannungsentladungen mitumfasst, die für das blosse Auge kaum oder nicht zu sehen sind.

### Legende

- 1: Karde
- 2: Füllschacht
- 3: Speisewalze
- 4: Briseur
- 5: Trommel, Tambour
- 5a: Antriebswelle der Trommel 5
- 5b: Nocken
- 6: Wanderdeckelanordnung
- 7: Faserspeisesystem
- 8: Faserabnehmersystem
- 9: Abnehmer
- 10: Kardierelemente
- 11: Faserbandablage
- 12: Flexibelbogen
- 13: Deckelstäbe
- 14: Zentralabschnitt
- 15: Mittelsteg
- 16: Klammern
- 17: Deckelkopf
- 18: Endlosband
- 19: Gleitschuh
- 20: Garniturstreifen
- 21: Deckelgarnitur
- 22: Spitzen der Garniturnadeln des Deckelstabes 13
- 23: Spannungsquelle
- 23a: Impulsgenerator
- 24: Schleifkontakt zu Deckelstab 13
- 25: Trommelgarnitur
- 26: Spitzen der Garnitur der Trommel 5
- 27: Schleifkontakt zu Trommel 5
- 28: Zeitabstandsmessung / Frequenzmessung
- 29: Auswerteeinheit
- 30: Anzeige
- 31: Signaleinrichtung
- 32: Einstellmittel
- 33: Widerstand
- 34: Kondensator
- 35, 35': Flächenelement
- 36: Rückwärtiger Schenkel der Garniturnadeln 21
- 37: Leitzone des Flächenelements 35
- 38 - 40: Leitzonen des Flächenelements 35
- 38'- 40': Leitzonen des Flächenelements 35'
- 41 - 43: Signalleitungen der Leitzonen 38 - 40
- 41' - 43': Signalleitungen der Leitzonen 38' - 40'
- 44 - 46: Kontakte der Leitzonen 38-40
- 44' - 46': Kontakte der Leitzonen 38' - 40'
- 47 - 49: Schleifkontakte
- 50: Messstelle Wanderdeckel
- 51: Messstelle Trommel
- 52: Sensor zu Messstelle Wanderdeckel
- 53: Sensor zu Messstelle Trommel
- 54: Stromaufnahmemessung
- 55: Schleifkontakt
- 56: Hochfrequenz (HF)-Oszillator
- 57: Hochpassfilter
- 58: Tiefpassfilter
- 60: Faserleitelement
- 61: Luft - Eintrittsspalte
- 62: Luft - Eintrittsöffnung
- 63: Luft - Austrittsöffnung
- 64: Luft - Austrittsspalte
- 65: Wand
- 66: Abdeckung
- 67: Isolator
- 68: Kabel
- 71: Referenzelektrode, fixe Elektrode
- 72: Isolator
- 73: Elektrodenspitze der Referenzelektrode 71
- 74: Schraube
- 75: Referenzelektrode, verstellbare Elektrode
- 76: Elektrodenspitze der Referenzelektrode 75
- 77: Stellschraube
- 78: Feder
- 79: Schenkel
- 80: Unterstützungsplatte
- 81, 82: Aktoren
- 83: Elektromotor
- 201: Entstörwiderstandskabel
- 202: Widerstandsmatte
- 203: energierekuperativer Kondensator
- 204: erstes Kommutationselement
- 205: zweites Kommutationselement
- 206: drittes Kommutationselement
- 207: Strommessung
- 208: Spannungsmessung
- 209: UV-Fotodiode
- 210: Glimm-Entladung
- 211: Streamer-Entladung
- 212: Leader-Entladung
- I: Unselbständige Entladung
- II: Selbständige Entladung
- III: Townsend-Entladung
- IV: Sichtbare Entladung
- V: Voll-Entladung

- C_{X}: Kapazität zwischen Deckel und Trommel
- C_{Y1-3}: Teilkapazitäten
- E: Einsatzfeld
- F: Flocken
- FB: Faserband
- G: Gleitfläche
- L: Luft
- S: Bewegungsrichtung Deckelstab
- T: Drehrichtung Trommel 5
- U_{E}: Spannung Entladungsstrecke
- U_{S}: Spannung gesteuerte Entladung
- U_{VL}: Spannung Vollentladung
- U_{GL}: Spannung Glimmentladung
- X: Breite eines Deckelstabes
- Y: Spannungsanstieg vor der Vollentladung
- R₁, α₁: Hauptgeometrie Spitzen Garnitur Trommel
- R₂, α₂: Hauptgeometrie Spitzen Garnitur Deckelstab
- δ, δ,: Kardierspalt
- δ_{Max}: grösster Kardierspalt
- δv: Kardierspalt der Referenzmessung
- Θ: Neigungswinkel der Deckelgarnitur 21 gegenüber der Trommel 5

## Patentansprüche

1. Textilmaschine, insbesondere Spinnereivorbereitungsmaschine, welche zwei sich gegenüberliegende Garnituren (21, 25) und eine Vorrichtung zum berührungslosen Messen der sich gegenüberliegenden Garnituren (21, 25) aufweist, **dadurch gekennzeichnet dass** die Vorrichtung eine Spannungsquelle (23) und einen Impulsgenerator (23a) zum Erzeugen einer veränderbaren Potentialdifferenz aufweist und dass Spitzen (22, 26) der Garnituren (21, 25) elektrisch leitend sind und wobei der Impulsgenerator (23a) mit den Spitzen (22, 26) derart verbunden ist, dass durch Anlegen der veränderbaren Potentialdifferenz zwischen Spitzen (22, 26) der beiden Garnituren (21, 25) mindestens zwei aufeinanderfolgende Funkenentladungen erzeugbar sind, und wobei Mittel (28) für eine Zeitabstandsmessung zwischen zwei Funkenentladungen und/oder eine Frequenzmessung von aufeinanderfolgenden Funkenentladungen vorgesehen sind.

2. Textilmaschine nach Anspruch 1, **dadurch gekennzeichnet, dass** eine Auswerteeinheit (29) vorgesehen ist, die aus dem gemessenen Zeitabstand und/oder der Frequenz der Funkenentladungen den Abstand (δ) zwischen den Spitzen (22, 26) und/oder die Positionierung der einen Garnitur (21) zur anderen Garnitur (25), insbesondere deren Neigungswinkel (Θ), zu ermitteln vermag.

3. Textilmaschine nach Anspruch 1 oder 2, **dadurch gekennzeichnet, dass** ein Hochfrequenz-Oszillator (56) vorgesehen ist, welcher eine Schwingung erzeugt, die einem durch den Impulsgenerator (23a) bestimmten zeitlichen Verlauf des Spannungsaufbaus zwischen den Funkenentladungen überlagert ist.

4. Textilmaschine nach einem der vorangehenden Ansprüche, **dadurch gekennzeichnet, dass** die zwei sich gegenüberliegenden Garnituren (21, 25) sich relativ zueinander bewegen.

5. Textilmaschine nach Anspruch 4, **dadurch gekennzeichnet, dass** die veränderbare Potentialdifferenz in ihrem zeitlichen Verlauf über den Impulsgenerator (23a) derart einstellbar ist, dass die bei einem bestimmten Abstand (δ) resultierende relative Bewegung zwischen den Garnituren (21, 25) weniger als 0.5 mm, vorzugsweise weniger als 0.03 mm zwischen zwei Funkenentladungen beträgt.

6. Textilmaschine nach einem der vorhergehenden Ansprüche, **dadurch gekennzeichnet, dass** die Spannungsquelle (23) eine Stromaufnahmemessung (54) aufweist, die den bei einer Berührung der Spitzen (22, 26) entstehenden Kurzschlussstrom misst und **dadurch** eine Kollisionswarnung anzeigbar ist.

7. Textilmaschine nach einem der vorangehenden Ansprüche, **dadurch gekennzeichnet, dass** zwischen dem Impulsgenerator (23a) und der Garnitur (21) ein einfacher oder verteilter elektrischer Widerstand (201) vorgesehen ist.

8. Textilmaschine nach Anspruch 7, **dadurch gekennzeichnet, dass** der elektrische Widerstand (201) ein Entstörwiderstandskabel oder eine Widerstandsmatte aus leitfähigem Kunststoff oder eine Schicht aus leitfähiger Farbe oder Kunstharz ist.

9. Textilmaschine nach einem der vorangehenden Ansprüche, **dadurch gekennzeichnet, dass** ein elektrischer Last-Widerstand sowie ein erstes Kommutationselement (204) zwischen dem Impulsgenerator (23a) und der Garnitur (21), und ein zweites Kommutationselement (205) zwischen der Garnitur (21) und dem Last-Widerstand vorgesehen sind.

10. Textilmaschine nach Anspruch 9, **dadurch gekennzeichnet, dass** der elektrische Last-Widerstand durch einen energierekuperativen Kondensator (203) ersetzt ist und ein drittes Kommutationselement (206) zwischen dem Kondensator (203) und der Spannungsquelle (23) vorgesehen ist.

11. Textilmaschine nach einem der Ansprüche 9 oder 10, **dadurch gekennzeichnet, dass** zur Messung des Entladungsbeginns und die Ansteuerung der Kommutationselemente (204, 205, 206) eine Strommessung (207) oder eine Spannungsmessung (208) oder eine Ultraviolett-Fotodiode (209) vorgesehen ist.

12. Textilmaschine nach einem der Ansprüche 1 bis 6, **dadurch gekennzeichnet, dass** ein Messsystem zur Bestimmung von Stoss-Strömen einer Vorentladung vorgesehen ist und damit eine Steuerspannung (U_{S}) bestimmbar ist, die zur Unterbrechung einer Vorentladung nutzbar ist.

13. Textilmaschine nach einem der vorangehenden Ansprüche, **dadurch gekennzeichnet, dass** ein zusätzliches Elektrodenpaar (71, 75) zur Funkenentladung als Referenzmesseinheit vorgesehen ist, dessen ggf. veränderbarer Abstand bekannt ist und welches an den Spitzen (73, 76) eine ähnliche Oberflächengeometrie wie die besagten Garniturspitzen (22, 26) aufweist.

14. Vorrichtung zum berührungslosen Messen eines Abstandes zwischen zwei sich gegenüberliegenden, Spitzen aufweisenden und elektrisch leitenden Bauteilen einer Textilmaschine **dadurch gekennzeichnet, dass** die Vorrichtung eine Spannungsquelle (23) und einen Impulsgenerator (23a) zum Erzeugen einer veränderbaren Potentialdifferenz aufweist und wobei der Impulsgenerator (23a) mit den Bauteilen derart koppelbar ist, dass durch Anlegen der veränderbaren Potentialdifferenz zwischen den Spitzen der Bauteile mindestens zwei aufeinander folgende Funkenentladungen erzeugbar sind, und wobei Mittel vorgesehen sind um einen Zeitabstand zwischen zwei Funkenentladungen und/oder eine Frequenz von aufeinanderfolgenden Funkenentladungen zu messen.

15. Verfahren zur berührungslosen Messung eines Abstandes zwischen zwei sich gegenüberliegenden Bauteilen einer Textilmaschine, insbesondere Spinnereivorbereitungsmaschine, welche elektrisch leitende Spitzen aufweisen **dadurch gekennzeichnet, dass** mit einer Spannungsquelle (23) und einem Impulsgenerator (23a) eine veränderbare Potentialdifferenz erzeugt wird und der Impulsgenerator (23a) mit den Bauteilen verbunden wird, wobei durch ein Anlegen der veränderbaren Potentialdifferenz zwischen den Bauteilen mindestens zwei aufeinanderfolgende Funkenentladungen zwischen den Spitzen der Bauteile provoziert werden, und ein Zeitabstand zwischen zwei Funkenentladungen und/oder eine Frequenz von aufeinanderfolgenden Funkenentladungen gemessen wird.

## Claims

1. A textile machine, in particular a spinning preparation machine, which has two mutually opposite clothings (21, 25) and a device for the contactless measurement of the mutually opposite clothings (21, 25), **characterized in that** the device has a voltage source (23) and a pulse generator (23a) for generating a variable potential difference, and **in that** tips (22, 26) of the clothings (21, 25) are electrically conductive, the pulse generator (23a) being connected to the tips (22, 26) in such a way that, by the variable potential difference being applied between tips (22, 26) of the two clothings (21, 25), at least two successive spark discharges can be generated, and means (28) being provided for time interval measurement between two spark discharges and/or a frequency measurement of successive spark discharges.

2. The textile machine as claimed in claim 1, **characterized in that** an evaluation unit (29) is provided, which, from the measured time interval and/or the frequency of the spark discharges, can determine the distance (δ) between the tips (22, 26) and/or the positioning of one clothing (21) with respect to the other clothing (25), in particular their inclination angle (Θ).

3. The textile machine as claimed in claim 1 or 2, **characterized in that** a highfrequency oscillator (56) is provided, which generates an oscillation which is superposed on a time profile, determined by the pulse generator (23a), of the voltage build-up between the spark discharges.

4. The textile machine as claimed in one of the preceding claims, **characterized in that** the two mutually opposite clothings (21, 25) move in relation to one another.

5. The textile machine as claimed in claim 4, **characterized in that** the variable potential difference can be adjusted in its time profile via the pulse generator (23a) in such a way that the relative movement between the clothings (21, 25) which results in the case of a specific distance (δ) amounts to less than 0.5 mm, preferably to less than 0.03 mm, between two spark discharges.

6. The textile machine as claimed in one of the preceding claims, **characterized in that** the voltage source (23) has current consumption measurement (54) which measures the short-circuit current occurring during contact between the tips (22, 26), and a collision warning can thereby be indicated.

7. The textile machine as claimed in one of the preceding claims, **characterized in that** a simple or distributed electrical resistor (201) is provided between the pulse generator (23a) and the clothing (21).

8. The textile machine as claimed in claim 7, **characterized in that** the electrical resistor (201) is a resistance-type suppressor cable or a resistance mat consisting of conductive plastic or a layer of conductive dye or synthetic resin.

9. The textile machine as claimed in one of the preceding claims, **characterized in that** an electrical load resistor and also a first commutation element (204) between the pulse generator (23a) and the clothing (21) and a second commutation element (205) between the clothing (21) and the load resistor are provided.

10. The textile machine as claimed in claim 9, **characterized in that** the electrical load resistor is replaced by an energy-recuperative capacitor (203), and a third commutation element (206) between the capacitor (203) and the voltage source (23) is provided.

11. The textile machine as claimed in either of claims 9 and 10, **characterized in that** current measurement (207) or voltage measurement (208) or an ultraviolet photodiode (209) is provided for measuring the start of discharge and activating the commutation elements (204, 205, 206).

12. The textile machine as claimed in either of claims 1 to 6, **characterized in that** a measurement system for determining surge currents of a predischarge is provided, and consequently a control voltage (U_{S}) can be determined which can be used to interrupt a predischarge.

13. The textile machine as claimed in one of the preceding claims, **characterized in that** an additional pair of electrodes (71, 75) for spark discharge is provided as a reference measurement unit, of which the, if appropriate, variable distance is known and which has at the tips (73, 76) a similar surface geometry to said clothing tips (22, 26).

14. A device for the contactless measurement of a distance between two mutually opposite and electrically conductive components, having tips, of a textile machine, **characterized in that** the device has a voltage source (23) and a pulse generator (23a) for generating a variable potential difference, the pulse generator (23a) being couplable to the components in such a way that, by the variable potential difference being applied between the tips of the components, at least two successive spark discharges can be generated, and means being provided for measuring a time interval between two spark discharges and/or a frequency of successive spark discharges.

15. A method for the contactless measurement of a distance between two mutually opposite components of a textile machine, in particular a spinning preparation machine, which have electrically conductive tips, **characterized in that** a variable potential difference is generated by means of a voltage source (23) and a pulse generator (23a), and the pulse generator (23a) is connected to the components, at least two successive spark discharges between the tips of the components being provoked by the variable potential difference being applied between the components, and a time interval between two spark discharges and/or a frequency of successive spark discharges being measured.

## Revendications

1. Machine textile, en particulier machine de préparation à la filature, présentant deux garnitures opposées (21, 25) et un dispositif pour la mesure sans contact des garnitures opposées (21, 25), **caractérisée en ce que** le dispositif présente une source de tension (23) et un générateur d'impulsions (23a) pour générer une différence de potentiel variable, et **en ce que** les pointes (22, 26) des garnitures (21, 25) sont électriquement conductrices, et dans laquelle le générateur d'impulsions (23a) est relié aux pointes (22, 26) de telle sorte que l'application de la différence de potentiel variable entre les pointes (22, 26) des deux garnitures (21, 25) permet de générer au moins deux décharges disruptives successives, et dans laquelle sont prévus des moyens (28) pour une mesure d'intervalle de temps entre deux décharges disruptives et/ou une mesure de fréquence de décharges disruptives successives.

2. Machine textile selon la revendication 1, **caractérisée en ce qu'**une unité d'évaluation (29) est prévue, capable de déterminer, à partir de l'intervalle de temps mesuré et/ou de la fréquence de décharges disruptives mesurée, l'écartement (δ) entre les pointes (22, 26) et/ou le positionnement de ladite une garniture (21) par rapport à ladite autre garniture (25), en particulier leur angle d'inclinaison (Θ).

3. Machine textile selon la revendication 1 ou 2, **caractérisée en ce qu'**un oscillateur haute fréquence (56) est prévu qui génère une oscillation qui se superpose à une certaine variation dans le temps de la montée en tension entre les décharges disruptives, déterminée par le générateur d'impulsions (23a).

4. Machine textile selon l'une quelconque des revendications précédentes, **caractérisée en ce que** les deux garnitures opposées (21, 25) se déplacent l'une par rapport à l'autre.

5. Machine textile selon la revendication 4, **caractérisée en ce que** la différence de potentiel variable est réglable au niveau de sa variation dans le temps par le générateur d'impulsions (23a) de telle sorte que le mouvement relatif résultant à une certaine distance (δ) entre les garnitures (21, 25) est de moins de 0,5 mm, de préférence moins de 0,03 mm entre deux décharges disruptives.

6. Machine textile selon l'une quelconque des revendications précédentes, **caractérisée en ce que** la source de tension (23) présente une mesure de consommation de courant (54) mesurant le courant de court-circuit généré lors d'un contact des pointes (22, 26) et que cela permet ainsi d'afficher un avertissement de collision.

7. Machine textile selon l'une quelconque des revendications précédentes, **caractérisée en ce qu'**entre le générateur d'impulsions (23a) et la garniture (21), une résistance électrique (201) simple ou répartie est prévue.

8. Machine textile selon la revendication 7, **caractérisée en ce que** la résistance électrique (201) est un câble à résistance d'antiparasitage ou un tapis résistif en matière plastique conductrice ou une couche de peinture ou de résine synthétique conductrice.

9. Machine textile selon l'une quelconque des revendications précédentes, **caractérisée en ce qu'**une résistance de charge électrique ainsi qu'un premier élément de commutation électrique (204) sont prévus entre le générateur d'impulsions (23a) et la garniture (21), et un deuxième élément de commutation (205) est prévu entre la garniture (21) et la résistance de charge.

10. Machine textile selon la revendication 9, **caractérisée en ce que** la résistance de charge électrique est remplacée par un condensateur à récupération énergétique (203) et un troisième élément de commutation (206) est prévu entre le condensateur (203) et la source de tension (23).

11. Machine textile selon l'une quelconque des revendications 9 ou 10, **caractérisée en ce que** pour la mesure du début de décharge et l'excitation de l'élément de commutation (204, 205, 206), une mesure de courant (207) ou une mesure de tension (208) ou une photodiode UV (209) est prévue.

12. Machine textile selon l'une quelconque des revendications 1 à 6, **caractérisée en ce qu'**un système de mesure pour déterminer des courants de choc d'une prédécharge est prévu et qu'il est ainsi possible de déterminer une tension de commande (U_{S}), qui peut être utilisée pour interrompre une prédécharge.

13. Machine textile selon l'une quelconque des revendications précédentes, **caractérisée en ce qu'**une paire d'électrodes (71, 75) supplémentaire est prévue pour la décharge disruptive en tant qu'unité de mesure de référence, dont l'écartement éventuellement variable est connu et qui présente au niveau des pointes (73, 76) une géométrie de surface similaire auxdites pointes de garniture (22, 26).

14. Dispositif pour la mesure sans contact d'un écartement entre deux éléments de construction d'une machine textile, mutuellement opposés, présentant des pointes et électriquement conducteurs, **caractérisé en ce que** le dispositif présente une source de tension (23) et un générateur d'impulsions (23a) pour générer une différence de potentiel variable, et dans lequel le générateur d'impulsions (23a) peut être couplé avec les éléments de construction de telle sorte que l'application de la différence de potentiel variable entre les pointes des éléments de construction permet de générer au moins deux décharges disruptives successives, et dans lequel des moyens sont prévus pour mesurer un intervalle de temps entre deux décharges disruptives et/ou une fréquence de décharges disruptives successives.

15. Procédé de mesure sans contact d'un écartement entre deux éléments de construction opposés d'une machine textile, en particulier d'une machine de préparation à la filature, qui présentent des pointes électriquement conductrices, **caractérisé en ce qu'**une source de tension (23) et un générateur d'impulsions (23a) génèrent une différence de potentiel variable et le générateur d'impulsions (23a) est relié aux éléments de construction, dans lequel une application de la différence de potentiel variable entre les éléments de construction provoque au moins deux décharges disruptives successives entre les pointes des éléments de construction, et un intervalle de temps entre deux décharges disruptives et/ou une fréquence de décharges disruptives successives est/sont mesurés.
